# EUROPEAN PATENT SPECIFICATION

(11) **EP 2 003 964 B1**
(45) Date of publication and mention of the grant of the patent: **22.12.2010**
(21) Application number: 07711606.9
(22) Date of filing: 21.02.2007
(51) Int. Cl.: A01N 25/30, A01N 57/20, A01N 59/14, A01N 53/00, A01N 47/36, A01N 43/84, A01N 43/653, A01N 43/54, C05G 3/06, A01P 7/00, A01P 13/00

(54) **AGROCHEMICAL COMPOSITIONS COMPRISING ALKYLENEDIOL-MODIFIED POLYSILOXANES**
AGRARCHEMIKALIENZUSAMMENSETZUNGEN MIT ALKYLENDIOL-MODIFIZIERTEN POLYSILOXANEN
COMPOSITIONS AGROCHIMIQUES COMPRENANT DES POLYSILOXANES MODIFIES PAR DES ALKYLENEDIOLS

(30) Priority: 13.03.2006 US 781967 P
(43) Date of publication of application: 24.12.2008
(73) Proprietor: Evonik Goldschmidt GmbH, 45127 Essen (DE)
(72) Inventor: SIMPELKAMP, Jörg, Richmond, VA 23225 (US); SILBER, Stefan, 47804 Krefeld (DE); FLEUTE-SCHLACHTER, Ingo, 45239 Essen (DE); KÖNIG, Frank, 45884 Gelsenkirchen (DE); SIEVERDING, Ewald, 55578 St. Johann (DE); LINDSAY, David, Chester, VA 23836 (US)
(86) International application number: PCT/EP2007/001476
(87) International publication number: WO 2007/104408

(56) References cited:
- EP-A- 1 314 356
- EP-A1- 1 382 632
- EP-A2- 0 791 384
- STEVENS P J G: "ORGANOSILICONE SURFACTANTS AS ADJUVANTS FOR AGROCHEMICALS" PESTICIDE SCIENCE, ELSEVIER APPLIED SCIENCE PUBLISHER. BARKING, GB, vol. 38, no. 2/3, January 1993 (1993-01), pages 103-122, XP000408739 ISSN: 0031-613X cited in the application

## Description

### BACKGROUND OF THE INVENTION

### Field of the Invention

The invention relates to agrochemical compositions comprising an active agrochemical ingredient, at least one silicone alkylenediol-modified polysiloxane and optionally other ingredients.

### Description of the Related Art

Foliar-applied pesticidal and plant growth modifying chemicals are widely used in agricultural, industrial, recreational and residential areas worldwide. These chemical agents illustratively include insecticides, fungicides, herbicides, plant growth regulators and plant nutrients among other chemicals. Such chemicals are typically delivered to the target crop, pest, soil or water or pest by means of a foliar spray which can be water or oil based. Other methods of application such as a rope-wick applicator, ultralow volume spray or granular products are also possible. Some of these agents show contact action, killing, controlling or modifying the growth of target organisms at the site of deposition. Other chemicals are systemic, translocating within the plant to a site of action remote from the site of deposition. Still other chemicals show both contact and systemic action.

Surfactant formulations are commonly used in forestry, agriculture, and horticulture as agricultural adjuvants to improve the efficacy of agrochemical pesticides and nutrients such as micronutrients, growth regulators, biologicals, herbicides, fungicides, insecticides, acaracides and miticides. Surfactants are often used as dispersants, wetting and spreading agents, and emulsifiers in a formulated product or added to the tank mix in the form of an adjuvant preparation. Organosilicone surfactants provide surface tension values significantly lower than other commonly used surfactants. For example, the use of an organosilicone surfactant such as BREAK-THRU^{®} S240, Goldschmidt Chemical Corp., or Silwet^{®} L-77, Crompton Corp., in combination with a pesticide results in increased foliar uptake of the pesticide and, hence, increased efficacy of the pesticide in control of weed growth, insect or disease control. The use of organosilicone surfactants as an agrochemical compositions was also referred to in Silicone Surfactants, volume 86, edited by Randall M. Hill, (Chapter 9- "Use of Organosilicone Surfactants as Agrichemical Adjuvants", Penner et al.), pages 241-255, (1999).

Among the numerous studies of the foliar uptake of the herbicide glyphosate combined with such silicone surfactants are those reported by Field et al., Pesticide Science, 1988, Vol. 24, pp. 55-62; Stevens et al., Pesticide Science, 1991, Vol. 33, pp. 371-82; Gaskin et al., Pesticide Science, 1993, Vol. 38, pp. 185-92; and Gaskin et al., Pesticide Science, 1993, Vol. 38, pp. 193-200. An extensive review of 160 references relating to the use of organosilicones as adjuvants for agrochemicals was provided by Stevens in Pesticide Science, 1993, Vol. 38, pp. 103-22.

It is well recognized in the art that trisiloxane alkoxylate surfactants have the ability to impart the property of superspreading to agricultural spray mixtures. It is equally well-known to the practitioner of the art that silicone surfactants can have antagonistic effects on the efficacy on herbicides on certain plant species. Gaskin et al., (Pesticide Science, 1993, Vol. 38, pp. 185-192) demonstrated that some trisiloxane ethoxylates (TSE), such as Silwet^{®} L-77 surfactant (available from GE), can antagonize cuticular penetration of a herbicide into grasses, when compared to the herbicide alone. The term antagonism is used to indicate that the treatment of herbicide plus adjuvant is less effective than the comparative herbicide treatment. It is also known that, due to the decrease of the surface tension of pesticidal spray solutions, trisiloxane ethoxylate surfactants can cause run-off of the solutions from the plant surfaces, when used at higher concentrations in large water volumes per ha, which consequently results in loss of pesticide and thus loss of pesticidal efficacy. The term efficacy is here understood as beneficial effect for the protection of the crop against harm through weeds, insects, diseases, animals or other detrimental organisms.

U.S. Patent No. 6,734,141 to Humble et al. make reference to superspreading not being a required attribute of silicone surfactants in order to enhance the efficacy of herbicides, and describes among others a class of non-spreading trisiloxane alkoxylate surfactants.

WO 01/87063 to Policello et al. refers to agrochemical compositions employing organosiloxanes comprising polyhydric groups, the polyhydric groups having more than two hydroxy groups or two hydroxy groups in conjunction with a polyether group. The polyhydric groups may be aliphatic hydrocarbon groups, preferably completely saturated, and are preferably derived from a mono, di, oligo or polysaccharide, or derivatives thereof.

Trisiloxane alkoxylate surfactants, whether superspreading or non-spreading, have become the most widely used class of silicone surfactants and are known to be excellent adjuvants for pesticidal tank-mix applications. An intrinsic and undesired property of trisiloxane alkoxylates however is the hydrolytic instability in aqueous environments at non-neutral pH values, as summarized in Silicone Surfactants, volume 86, edited by Randall M. Hill, (Chapter 9 - "Use of Organosilicone.Surfactants as Agrichemical Adjuvants", Penner et al.), pages 241-255, (1999). This limits the range of formulation conditions available to the practitioner of the art using trisiloxane alkoxylate surfactants to the neutral and close to neutral pH range.

Efforts have been made to find compositions with enhanced hydrolytic stability. WO 99/40785 refers to compositions comprising trisiloxane ethoxylate surfactants with a dispersed oil phase in WO 99/40785.

However, there is remains a need in the art for a silicone surfactant which enhances the efficacy of agrochemical compositions and has an increased hydrolytic stability at non-neutral pH values. Another common deficiency of trisiloxane alkoxylate surfactants is that foam generated by using these products is difficult to control, which can be detrimental especially for the use in tarik-mix applications.

There have been many attempts to mitigate the foam problem by use of polysiloxane-based foam control agents, such as those referred to in WO 00/56419, EP 0 791 384, U.S. Patent No. 5,968,872 and U.S. Patent No. 5,504,054. However, no beneficial effects of the foam control agents on efficacy of pesticidal compositions are described.

For example, U.S. Patent No. 5,968,872 discloses that silicone polyether copolymers with a low degree of polymerization (3 to 4 Si units) provide control for foams generated by organosilicone based surfactants in water without the need for an additional antifoam component. The copolymer foam control agent is a compound of the formula (CH₃)₃SiO{SiO(CH₃)₂}_{X}(SiOCH₃R¹)_{Y}Si(CH³)₃ wherein X+Y=1 to 2, Y=I, R¹ is an alkyleneoxide group of the formula CₐH₂ₐO(C₃H₆O)_{z}R² wherein a=3 to 4, z is 1 to 15, R² is hydrogen, a hydrocarbon radical of one to four carbons or acetyl.

However, it would be preferable for one of ordinary skill in the art to have a silicone surfactant which has both efficacy enhancing and foam-suppressing properties, without the need for additional foam control agents.

Alkylenediol-modified siloxanes are known to display defoaming properties in lubricant, paint and coating applications.

DE-A-40 32 006 (U.S. Patent No. 5,474,709) refers to a method of defoaming and/or degassing organic systems by adding an antifoaming agent comprising an organopolysiloxane to the organic system, which may consist of diesel oil or crude oil or products from the cracking of the oil. The organopolysiloxane used is a polymer composed of siloxane units of the general formulae

RₐSiO_{(4-a)/2} and R_{b}A_{c}SiO_{4-(b+c)/2}

in which
- R: is a monovalent hydrocarbon radical having 1 to 18 carbon atoms per radical,
- A: is a radical of the general formula 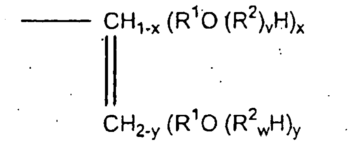 in which
R¹ is a radical of the formula -CR³H-,
R² is a radical of the formula -CR⁴H-CH₃ or -(CH₂)₃,
R³ is hydrogen or a monovalent organic radical,
R⁴ is hydrogen or a monovalent organic radical,
v, w are each 0 or an integer, v + w being on average from 0 to 16,
x, y are 0 or 1, x + y being 1 or 2,
- a: is 1,2 or 3,
- b: is 0, 1 or 2, and
- c: is 1 or 2, the sum b + c being not greater than 3.

The siloxanyl-alkenediyl-bis-ω-hydroxypolyoxyalkylenes used themselves and their preparation are referred to in patent DD-A-255 737.

U.S. Patent No. 6,858,663 to Knott et al. refers to the use of alkylenediol-modified siloxanes for defoaming aqueous paints and inks, of the general formula (I): 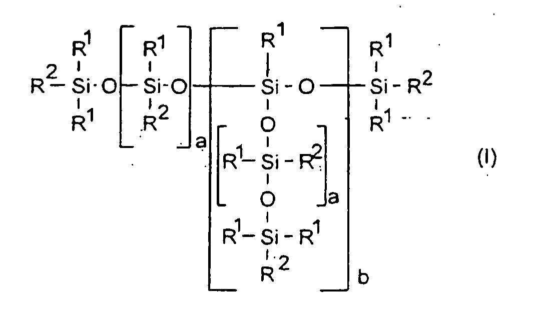 where the radicals
- R¹: are alkyl radicals having 1 to 4 carbon atoms or aryl radicals, wherein at least 80% of the radicals R¹ are methyl radicals,
- R²: in the molecule are identical or different and can have the following definitions:

(a) 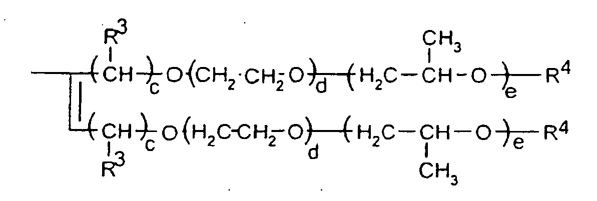 or
(b) -(CH₂-)_{f}OR⁵;
   or
(c) -(CH₂-)_{g}(OC₂H₄-)ₕ(OC₃H₆-)ᵢ(OC₄H₈)ⱼ(OCH₂ CH(C₆H₅))ₖOR⁶.

These compounds were not taught or described in the Knott patent to be useful as adjuvants for combination in an agrochemical composition.

Therefore, there still exists a need in the art for silicone surfactants suitable for use in agrochemical compositions which have increased hydrolytic stability, enhance the efficacy of the agrochemical active agents and/or provide foam suppression.

### OBJECTS OF THE INVENTION

It is an object of the invention to provide an agrochemical composition with enhanced efficacy which comprises of an agrochemically active agent and a silicone surfactant.

It is a further object of the invention to provide a method for enhancing the performance of agrochemical composition with a silicone surfactant.

It is a further object of the invention to provide a method of suppressing foam in an agrochemical composition with a silicone surfactant with increased hydrolytic stability.

It is a further object of the invention to provide a method of dispersing solids in an agrochemical composition.

It is a further object of this invention to provide a method for enhancing the performance of agrochemical compositions and suppress foam with a silicone surfactant having increased hydrolytic stability.

It is a further an object of this invention to prepare low foaming pesticide formulations containing a silicone surfactant having increased hydrolytic stability and enhancing the efficacy of agrochemically active ingredients.

### DETAILED DESCRIPTION OF THE INVENTION

The objects of the invention can be achieved by using alkylenediol-modified polysiloxanes of the general formula (I): 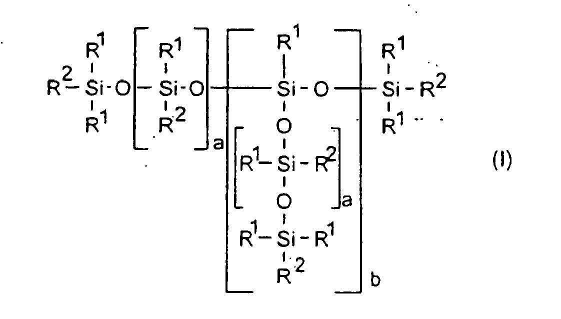 wherein
- R¹: are alkyl radicals having 1 to 4 carbon atoms or aryl radicals, wherein at least 80% of the radicals R¹ are methyl radicals,
- R²: in the molecule are identical or different and can have the following definitions:
a) 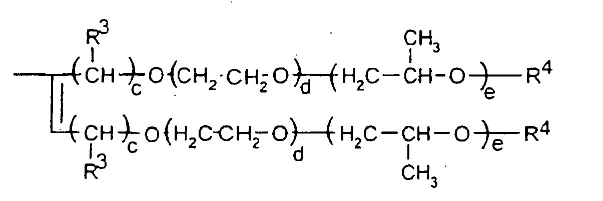 in which
   R³ is a hydrogen or alkyl radical,
   R⁴ is a hydrogen, alkyl or carboxyl radical,
   c is a number from 1 to 20,
   d is a number from 0 to 50,
   e is a number from 0 to 50 or
b) correspond to the radical R¹,
   with the proviso that in the average molecule at least one radical R² has the definition (a),
   a is a number from 1 to 200, preferably from 1 to 50, and especially preferred from 2 to 20, and
   b is a number from 0 to 10, preferably < 5, and in particular 0.

The siloxane framework can be straight-chain (b = 0) or else branched (> 0 to 10). The value of b and also the value of a are to be understood as average values in the polymer molecule, since the polysiloxanes for use in accordance with the invention are in the form of - generally - equilibrated mixtures. One of ordinary skill in the art understands that owing to their polymeric nature, the compounds are in the form of a mixture having a distribution which is governed essentially by the laws of statistics. The values for all indices therefore represent average values.

The radicals R¹ are alkyl radicals having 1 to 4 carbon atoms, such as methyl, ethyl, propyl or butyl radicals, or aryl radicals, such as the phenyl radicals which are preferred. For reasons of preparation and price the methyl radicals are preferred. In one embodiment of the invention, at least about 80% of the radicals R¹ are methyl radicals, preferably all of the radicals R¹ are methyl radicals.

R² in the molecule can be identical or different with the proviso that in the average molecule, at least one radical R² has the definition (a). The radicals R² can have the structure
(a) 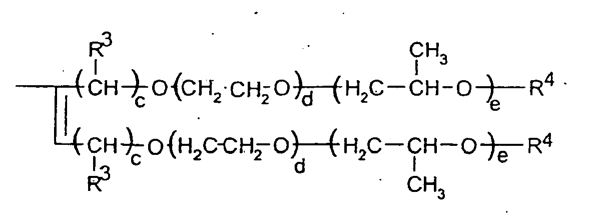 in which
   - R³: is a hydrogen or C₁-C₂₀ linear or branched alkyl radical, in particular a lower alkyl radical having 1 to 4 carbon atoms, preferably hydrogen.
   - R⁴: is a hydrogen, alkyl or acyl radical. In one embodiment of the invention, the alkyl or acyl radicals have 1 to 4 carbon atoms. Preferably, R⁴ is a hydrogen;
   - c: is a number from 1 to 20, preferably 1;
   - d and e: are independently of one another integers from 0 to 50.
   In one embodiment of the invention, radical (a) in which R³ and R⁴ are hydrogens, c is 1, and the d and e independently of one another are each from 0 to 10, with the proviso that d+e is at least 1. These variables are understood by those of ordinary skill in the art to be average numbers, since it is known that the addition reaction of alkylene oxides such as ethylene oxide and propylene oxide onto alcohols produces a mixture of compounds with different chain lengths. These radicals (a) may be introduced into the molecule of the polysiloxane by addition reaction of correspondingly substituted alkyne derivative precursors onto SiH groups of a prior art polysiloxane in the presence of a hydrosilylation catalyst;
   or
(b) the radical R² may also correspond to the radical R¹, preferably being a methyl radical.

The alkylenediol-modified silicone surfactants of this invention show good ecological and toxicological properties. They can be advantageously used in a variety of agrochemical compositions, containing one or several agrochemically active ingredients.

The use of alkylenediol-modified surfactants can improve various desired properties of agrochemical compositions, such as, for example, efficacy, manufacturing and stability of emulsions and dispersions, decrease of foaming/air entrapment, and by acting a potential synergist.

Agrochemically active ingredients are those which are registered for use in individual countries to protect plants or to avoid damage from plants or to avoid yield losses of crops. Such active ingredients can be of synthetic as well as of biological nature. Such ingredients can also be extracts as well as antagonistically active organisms. They are often also commonly named pesticides which are known by people skilled in the art. Pesticides include acaricides (AC), algicides (AL), attractants (AT), repellents (RE), bactericides (BA), fungicides (FU), herbicides (HB), insecticides (IN), molluscicides (MO), nematicides (NE), rodenticides (RO), sterilants (ST), viricides (VI), plant growth regulators (PG) and which are used alone or in combinations thereof. Preferred pesticides are HB, FU, IN, PG, and in particular HB, FU, IN.

Chemical classes, compounds of active ingredients or organisms which are agriculturally acceptable are, together with their use or uses, are listed for example in 'The Pesticide Manual', 13th edition, 2003, The British Crop Protection Council, in 'The BioPesticide Manual', 2nd edition, 1998, The British Crop Protection Council and in other there cited literature.

Examples of herbicidally active materials include but are not limited to acetochlor, acifluorfen, aclonifen, acrolein, alachlor, ametryne, amitrole, asulam, atrazine, benazolin, bensulfuronmethyl, bentazon, benzofenap, bialaphos, bifenox, bromacil, bromobutide, bromofenoxim, bromoxynil, butachlor, butafenacil, chlomethoxyfen, chloramben, chloroacetic acid, chlorbromuron, chlorimuron-ethyl, chlorotoluron, chlomitrofen, chlorotoluron, chlorthaldimethyl, clomazone, clodinafop, clopyralid, clomeprop, cyanazine, 2,4-D, 2,4-DB, daimuron, dalapon, desmedipham, desmetryn, dicamba, dichlobenil, dichloroprop, diclofop, difenzoquat, diflufenican, dimefuron, dimethachlor, dimethametryn, dimethenamid, dinitramine, diquat, diuron, endothall, ethametsulfuron-methyl, Ethofumesan, fenac, fenclorim, fenoxaprop, fenoxaprop-ethyl, flamprop-methyl, flazasulfuron, fluazifop, fluazifop-p-butyl, flumetsulam, flumiclorac-penyl, fluoroglycofen, flumetsutam, flumeturon, flumioxazin, flupoxam, flupropanate, fluridone, fluroxypyr, flurtamone, fomasafen, fosamine, glufosinate, glyphosate and its salts thereof, (such as alkyl ammonium or group I metal salts.), haloxyfop, imazameth, imazamethabenz, imazamox, imazapic, imazapyr, imazaquin, imazethapyr, ioxynil, isoproturon, isoxaben, isoxapyrifop, lactofen, lenacil, linuron, MCPA, MCPB, mecoprop, mefenacet, mesotrione, metazachlor, methabenzthiazuron, metalachlor, methylarsonic acid, metolachlor, metobenzuron, metosulam, metamitron, naproanilide, naptalam, neburon, nicosulfuron, nonanoic acid, norflurazon, oryzalin, oxadiazon, oxyfluorfen, paraquat, pendimethalin, phenmedipham, picloram, picolinafen, pretilachlor, prodiamine, prometon, prometryn, propachlor, propazine, propisochlor, propyzamide, pyrazolynate, pyrazosulfuron-ethyl, pyributicarb, pyridate, quinclorac, quizalofop-ethyl, quizalofop-P, quinclorac, rimsulfuron, siduron, simazine, simetryn, sulfamic acid, a sulfonylurea, 2,3,6-TBA, terbumeton; terbuthylazine, terbutryn, trichloroacetic acid, triclopyr, trietazine, thenylchlor, thiazopyr, tralkoxydim, trietazine, trifuralin, salts thereof, or a mixture thereof:

Examples of fungicidally active compounds include but are not limited to azoxystrobin, benalaxyl, benomyl, bitertanol, borax, bromocuonazole, sec-butylamine, captafol, captan, calcium polysulfide, carbendazim, chinomethionat, chlorothalonin, chlozolinate, copper and its derivatives, copper sulfate, cyprodinil, cyproconazole, dichlofluanid, dichlorophen, diclomezine, dicloran, diethofencarb, difenoconazole, dimethomorph, diniconazole, dithianon, epoxiconazole, famoxadone, fenarimol, fenbuconazole, fenfuram, fenhexamid, fenpiclonil, fenpropidin, fenpropimorph, fentin, fluazinam, fludioxonil, fluoroimide, fluqinconazole, flusulfamide, flutolanil, folpet, fosetyl, furalaxyl, guazatine, hexachlorobenzene, hexaconazole, hydroxyquinoline sulfate, imibenconazole, iminoctadine, ipconazole, iprodione, kasugamycin, kresoxim-methyl, mancozeb, maneb, mefenoxam, mepanipyrim, mepronil, mercuric chloride, metam, metalaxyl, metconazole, metiram, nabam, nickel bis(dimethyldithiocarbamate), nuarimol, oxadixil, oxine-copper, oxolinic acid, penconazole, pencycuron, phthalide, polyoxin B, prochloraz, procymidone, propamocarb, propiconazole, propineb, pyrifenox, pyraclostrobin, pyroquilon, quintozene, spiroxamine, sulfur, tebuconazole, tecloftalam, tecnazene, thiabendazole, thifluzamide, thiophanate-methyl, thiram, tolclofos-methyl, tolylfluanid, triadimefon, triadimenol, triazoxide, trifloxystrobin, triforine, triticonazole, vinclozolin, zineb, ziram, salts thereof, or a mixture thereof.

Examples of insecticidally actives compounds include but are not limited to abamectin, acephate, acetamiprid, acrinathrin, amitraz, azadirachtin, azamethiphos, azinphos-methyl, azocyclotin, bensultap, bifenthrin, bromopropylate, buprofezin, butoxycarboxim, cartap, chlorfenapyr, chlorfenson, chlorfluazuron, clofentezine, cournaphos, cyfluthrin, beta-cyfluthrin, lambda-cyhalothrin, cypermethrin, alpha-cypermethrin, theta-cypermethrin, cyromazine, DDT, deltamethrin, diafenthiuron, dicofol, dicrotophos, difenthiuron, diflubenzuron, dimethoat, emamectin benzoate, endosulfan, esfenvalerate, etoxazole, fenazaquin, fenbutatin oxide, fenoxycarb, fenpyroximate, fipronil, fluazuron, flucycloxuron, flufenoxuron, tau-fluvalinate, formetanate, furathiocarb, halofenozide, gamma-HCH, hexaflumuron, hexythiazox, hydramethylnon, hydrogen cyanide, imidacloprid, lufenuron, methamidophos, methidathion, methiocarb, methomyl, methoxychlor, mevinphos, milbemectin, mineral oils, monocrotophos, nicotine, nitenpyram, novaluron, omethoate, organophosphorus compounds, oxamyl, oxydemeton-methyl, pentachlorophenol, phosphamidon, pymetrozin, permethrin, profenofos, pyridaben, rape seed oil, resmethrin, rotenone, spinosad, sulfluramid, tebufenozide, tebufenpyrad, tebupirimfos, teflubenzuron, tetrachlorvinphos, tetradifon, tetramethrin, thiamethoxam, thiocyclam, thiodicarb, tralomethrin, trichlorfon, friflumuron, trimethacarb, vamidothion, and salts thereof, or a mixture thereof.

Examples of plant growth chemicals include but are not limited to 6-benzylaminopurine, chlormequat, chlorphonium, cimectacarb, clofencet, cloxyfonac, cyanarnide, cyclanilide, daminozide, dikegulac, ethephon, flumetralin, forchlorfenuron, gibberilic acid, inabenfide, indolylbutyric acid, 2-(1-naphthyl)acetamide, mepiquat, paclobutrazol, N-phenylphthalamic acid, thidiazuron, trinexapac-ethyl uniconzole, salts thereof, or a mixture thereof.

Examples for the other active ingredients include but not limited to:
AC: abamectin, bromocyclen, clofentezin, diazinon, tebufenpyrad;
AL: dichlorophen;
AT: 3,7-Dimethyl-2,6-ocatien-1ol;
RE: anthraquinon, citronellol, daphne-oil, guazatin, sebazinic acid;
BA: streptomycin, pentylphenol, dichlorophen;
IN: acetamiprid, cypermethrin, imidacloprid, pirimicarb, esfenvalerat, dimethoat, azadirachtin,
MO: ethanol, thiodicarb, metaldehyde, MCPA-thiethyl;
NE: benfuracarb, carbosulfan, fenamiphos, oxamyl, thionazin;
RO: papain, bromethalin, calciferol, cournafuryl, fluoroacetamid;
SA: benoxacor safener, colquintocet-mexyl safener, fenchlorim safener, mefenpyrdiethyl safener;
ST: dazomet, 1,2-dichloropropan;
SY: piperonylbutoxid, sulfaquinoxalin;

Biological actives include but are not limited to bacteria, actinomycetes, fungi, nematodes, viruses, or compounds or parts thereof. Preferred are Bacillus spp. (e.g. B. sphaericus IN, B. subtilis FU; B. thuringiensis IN with e.g. B. thuringiensis aizawai, B. thuringiensis israelensis, B. thuringiensis kurstaki, B. thuringiensis tenebrionis); Pseudomonas spp., Streptomyces griseoviridis FU; Ampelomyces quisqualis FU; Granuloseviren IN or for example Nuclear Polyhedrose Virus IN.

Optionally, other active ingredients may be added to the composition of the invention which includes but are not limited to those ingredients used in the non-crop or non-agricultural sector, which includes but is not limited to: forestry, seed, industrial areas and/or materials or construction materials or objects inclusive of homes and gardens; to protect against insects, diseases, unwanted plants and the like, as well as against bacteria, viruses, animals, snails, molluscs and the like.

Agrochemically active ingredients according to this invention may also include safeners and synergists. Appropriate herbicide safeners include but are not limited to benoxacor, cloquintocet, cyometrinil, cyprosulfamide, dichlormid, dicyclonon, dietholate, fenchlorazole, fenclorim, flurazole, fluxofenim, furilazole, isoxadifen, mefenpyr, mephenate, naphthalic anyhydride and oxabetrinil. Agrochemically active ingredients according to this invention may also include plant nutrients and micronutrients. Examples of plant nutrients include but are not limited to N, P, K, Ca, Mg in all their chemical forms and within all sources of solid or liquid fertilizers alone or in mixture in different possible concentrations. Examples for micro-plant-nutrients include but are not limite to Mn, Zn, Cu, B, Mo and mixtures thereof in their solid and liquid formulations, as salts, complex or/and chelated or other forms.

It is understood by those skilled in the art that the use of co-surfactants and co-adjuvants is common practice in spray tank mixes, pesticide formulations and within adjuvant blends including but not limited to, surfactants, stickers, humectants, solvents, oils, drift control agents, buffers, extenders, deposition and retention aids, (optionally) additional defoamers and antifoams, compatibility agents, and herbicide activity enhancers such as ammonium sulfate and nitrogen-containing fertilizers. Co-surfactants can include nonionic, cationic, anionic, zwitterionic surfactants or combinations thereof. When used in combination with other surfactants, the alkylenediol-modified surfactants may help to to reduce foam. When formulated with oils or solvents, the alkylenediol-modified silicones may act as spreading and wetting aids, emulsifiers, coemulsifiers or solubilizers.

Typical nonionic, surfactants are disclosed in McCutcheon's Detergents and Emulsifiers, North American Edition (2000), editor Michael Allured, McCutcheon Div. MC Publishing Co. and McCutcheon's Functional Materials, North American Edition (1992), editor Michael Allured, McCutcheon Div. MC Publishing Co. and include but are not limited to linear alcohol alkoxylates and their derivatives, branched alcohol alkoxylates and their derivatives, alkyl aryl alkoxylates and their derivatives , alkoxylated amides, alkoxylated fatty acids, alkoxylated fatty esters and oils, glycerol esters, alkoxylated glycerol esters such as such es ethoxylated castor oils, phosphate esters, mono- and di-glycerides, polyoxyalkylene copolymers containing ethylene oxide, propylene oxide, butylene oxide, styrene oxide or any combination thereof, trisiloxane surfactants , other siloxane surfactants (such as polysiloxanes bearing substituents from the group of polyalkyleneoxide, linear or branched alkyl, optionally substituted with hydroxy, alkoxy, ether, polyether or amino groups, or combinations thereof, sorbitan esters, polyoxyethylene alkylarylether, polyoxyalkylene alkyl arylether formaldehyde condensates, polyoxyethylenealkylene arylether, polyoxyalkylene alkylester, polyoxyalkylene alkyl sorbitan ester, polyoxyalkylene alkyl sorbitol ester, polyoxyalkylene alkyl sulfonamides, polyoxyalkylene rosin ester, polyhydroxy fatty acid amides, alkanolamides, fatty amides of sugars and alkyl glucosides, polyoxyethylene oleyl ether, polyoxyalkylene alkylphenols, alkyl glucosides, alkyl polyglucosides, sucrose esters, and the like.

'Alkoxylated' preferably refers to but is not limited to addiiton products with ethylene oxide, propylene oxide, butylene oxide, styene oxide, C₁₀-C₁₈ epoxyalkanes, or mixtures thereof.

Typical cationic surfactants are disclosed in McCutcheon's Detergents and Emulsifiers, North American Edition (2000), editor Michael Allured, McCutcheon Div. MC Publishing Co. and McCutcheon's Functional Materials, North.American Edition (1992), editor Michael Allured, McCutcheon Div. MC Publishing Co. and include but are not limited to including fatty amines, di-fatty quaternary amines, tri-fatty quaternary amines, imidazolinium quaternary amines, alkoxylated amines and their derivatives such as ethoxylated fatty.amines, quaternary ammonium surfactants, alkoxylated quaternary ammonium surfactants and their derivatives, alkoxylated imidazolines and their derivatives, propoxylated quaternary amines, siloxane surfactants (such as polysiloxanes bearing substituents from the group of polyalkyleneoxide, amino or quaternary ammonium groups), alkoxylated amino siloxanes, and combinations thereof.

Typical anionic surfactants are disclosed in McCutcheon's Detergents and Emulsifiers, North American Edition (2000), editor Michael Allured, McCutcheon Div. MC Publishing Co. and McCutcheon's Functional Materials, North American Edition (1992), editor Michael Allured, McCutcheon Div. MC Publishing Co. and include but are not limited to alkyl and aryl sulfates and sulfonates, including sodium alkyl sulfates, sodium mono- and di-alkyl naphthalene sulfonates, sodium alpha-olefin sulfonate, lignin and its derivatives (such as lignosulfonate salts), sodium alkane sulfonates, polyoxyalkyene alkylether sulfate, polyoxyalkylene alkylarylether sulfates, polyoxy-alkylene styrylphenylether sulfate, mono- and di- alkylbenzene sulfonates, alkylnaphthalene sulfonate, alkylnaphthalene sulfonate formaldehyde condensate, alkyl diphenylether sulfonates, olefine sulfonates, alkylphosphates, polyoxyalkylene alkyl phosphates, polyoxyalkylene phenylether phosphate, polyoxyalkylphenol phosphates, poly-carboxylates, fatty acids and salts thereof, alkyl glycinates, sulfonated methyl esters, sulfonated fatty acids, sulfosuccinates and their derivatives, acyl glutamates, acyl sarcosinates, alkyl sulfoacetates, acylated peptides, alkyl ether carboxylates, acyl lactylates, anionic fluorosurfactants, amid ether sulfates, N-methyl fatty acid taurides, mixtures thereof and the like, including sodium, potassium, ammonium and amine salts, and combinations thereof.

Typical amphoteric surfactants are disclosed in McCutcheon's Detergents and Emulsifiers, North American Edition (2000), editor Michael Allured, McCutcheon Div. MC Publishing Co. and McCutcheon's Functional Materials, North American Edition (1992), editor Michael Allured, McCutcheon Div. MC Publishing Co. and include but are not limited to betaines such as alkyl betaines and alkylamidoalkylbetaines, sulfobetaines, sultaines, hydroxysultaines, alkyliminoacetates, iminodialkanoates, aminoalkanoates, alkylammonium propionates, alkyliminoacetates, and iminodialkanoates, amine oxides, Monateric^{™} (amphoteric surfactant by Uniqema), Miranol^{®} (amphoteric surfactant by Rhodia), Tego^{®} Betaine (betaine by Degussa AG), Lonzaine^{®} (amphoteric surfactant by Lonza Ltd.), mixtures thereof and the like, and combinations thereof.

Various formulations such as a wettable powder, water-dispersible granules, water- based suspension concentrates, oil-based suspension concentrates, gel formulations, emulsifiable concentrates, water soluble granules, emulsions, microemulsions, suspoemulsions and multiple emulsions can be made with the organosilicone surfactants according to this invention.

A typical formulation may vary widely in concentration of the active ingredient depending on the particular agent used, the additives and carriers used, other active ingredients, and the desired mode of application. With due consideration of these factors, the active ingredient of a typical formulation may, for example, be suitably present at a concentration of from about 0.5% up to about 99.5% by weight of the formulation. Substantially inactive ingredients such as adjuvants and carriers may comprise from about 99.5% by weight to as low as about 0.5% by weight of the formulation. Surface active agents, if employed in the formulation, may be present at various concentrations, suitably in the range of about 1 to about 30% by weight. The following description, along with the typical formulations used for the biological testing, will serve to guide the formulator in preparing the most effective formulations. In this specification, "carrier" is intended to mean and include diluents, extenders and other vehicles commonly employed in pesticidal and veterinary formulations to control application rates and dosages.

Dusts are admixtures of the active ingredient with finely divided solid carriers and/or diluents which includes but is not limited to talc, silica, natural clays, kieselguhr, pyrophyllite, chalk, diatomaceous earths, calcium phosphates, calcium and magnesium carbonates, sulfur, lime, flours, and other organic and inorganic solid carriers. These finely divided formulations generally have an average particle size of less than about 45 µm, (No. 325, U.S.A. Standard Sieve Series). In most cases, the active ingredient will be present in dust formulations at a concentration in the range of about 1 to about 15% by weight, and occasionally from about 1% to about 30% by weight, the balance of the composition typically being agrochemically acceptable carrier or diluent.

For solid formulations, it is possible to impregnate solid carriers with liquid components, like alkylene-diol-derived siloxanes, other surfactants or liquid active ingredients.

Wettable powders, also useful formulations for these biocides, are in the form of finely divided particles which disperse readily in water or other liquid vehicles. The wettable powder is ultimately applied to the soil or plant as a dry dust or a dispersion in water or other liquid. Typical carriers for wettable powders include but are not limited to fuller's earth, kaolin clays, silicas, and other highly absorbent or adsorbent inorganic diluents. The concentration of active ingredient in wettable powders is dependent upon physical properties of the active ingredient and the absorbency characteristics of the carrier. Liquids and low melting solids (mp 100°C.) are suitably formulated in the concentration range of about 5 to about 50% by weight, usually from about 10 to about 30%; high melting solids (mp 100°C.) are formulated in the range of about 5 to about 95% by weight, usually about 50 to about 85%. An agrochemically acceptable carrier or diluent, frequently including a small amount of a surfactant to facilitate wetting, dispersion, and suspension, accounts for the balance of the formulation.

Granules are admixtures of the active ingredients with solids of particle sizes generally in the range of about 4.75 mm to about 150 µm (No. 4 to No. 100, U.S.A. Standard Sieve Series). Granular formulations may employ hard core materials which includes but is not limited to sands and other silicates, mineral carbonates, sulfates or phosphates and the like, or porous cores which includes but is not limited to attapulgite clays, fuller's earth, kieselguhr, chalk, diatomaceous earths, ground com cobs, wood dusts and the like. Impregnating or binding agents which includes but is not limited to aliphatic and aromatic petroleum solvents, alcohols, ethers, ketones, esters, vegetable oils, polyvinyl acetates, polyvinyl alcohols, dextrins, sugars and the like are commonly used to aid in coating or impregnating the solid carriers with the active ingredient. Emulsifying agents, wetting agents, dispersing agents, and other additives known in the art may also be added.

A typical granular formulation may suitably contain from about 1% to about 50% by weight active ingredient and about 99% to about 50% by weight of inert materials.

Microencapsulated or other controlled release formulations may also be used with biocides of this invention for control of nematodes and soil insects.

Emulsifiable concentrates (EC's) are homogeneous liquid compositions, usually containing the active ingredient dissolved in a liquid carrier. Commonly used liquid carriers include but are not limited to xylene, heavy aromatic naphthas, isophorone, and other nonvolatile or slightly volatile organic solvents. For application of the active ingredient, these concentrates are dispersed in water, or other liquid vehicle, forming an emulsion, and are normally applied as a spray to the area to be treated. The concentration of the essential active ingredient in EC's may vary according to the manner in which the composition is to be applied, but, in general, is in the range of about 0.5 to about 95%, frequently about 10 to about 80%, by weight of active ingredient, with the remaining about 99.5 to about 5% being surfactant and liquid carrier, by weight.

Suitable solvents include but are not limited to hydrocarbons, which may be unsubstituted or substituted, for example aromatic hydrocarbons, (mono- or polyalkyl-substituted benzenes, such as toluene, xylenes, mesitylene, ethylbenzene), or mono- or polyalkyl-substituted naphthalenes, such as 1-methylnaphthalene, 2-methylnaphthalene or dimethylnaphthalene, or other benzene-derived aromatic hydrocarbons, such as indane or Tetralin®, or mixtures thereof, for example straight-chain or branched aliphatics, for example of the formula CₙH₂ₙ₊₂, such as pentane, hexane, octane, 2-methylbutane or 2,2,4-trimethylpentane, or cyclic, optionally alkyl-substituted aliphatics, such as cyclohexane or methylcyclopentane, or mixtures thereof, such as solvents of the Exxsol® D series, Isopar® series or Bayol® series, for example Bayol® 82 (ExxonMobil Chemicals), or the Isane® IP series or Hydroseal® G series (TotalFinaElf), mixtures of aromatic and aliphatic hydrocarbons, such as solvents of the Solvesso® series, for example Solvesso® 100, Solvesso® 150 or Solvesso® 200 (ExxonMobil Chemicals), of the Solvarex®/Solvaro® series (TotalFinaElf) or the Caromax® series, for example Caromax®28 (Petrochem Carless), or halogenated hydrocarbons, such as halogenated aromatic and aliphatic hydrocarbons, such as chlorobenzene or methylene chloride, or polar solvents, for example aprotic polar solvents, such as fully etherified and fully esterified C₁-C₉-alkanoic acids which may be mono-, di- or polyfunctional, for example the ethers and esters with C₁-C₁₈-alkyl alcohols, ketones , phosphoric acid esters, amides such as C₁-C₁₀-alkanoic amides. Optionally N-methyl or N,N dimethylsubstituted, nitriles or sulfones, for example diisobutyl adipate, Rhodiasolv® RPDE (Rhodia), acetone, cyclohexanone, Jeffsol® PC (Huntsman), γ-butyrolactone, N-methylpyrrolidone, dimethyl sulfoxide, acetonitrile, tributylphosphatam or the Hostarex® PO series (Clariant), or protic polar solvents, such as alcohols, amines, carboxylic acids. The alcohols, amines or carboxylic acids preferably have 1 to 18 carbon atoms and can be straight-chain, branched or cyclic and saturated or unsaturated and may optionally comprise heteroatoms and be mono- or polyfunctional. Examples of alcohols are polyhydric C₁-C₁₀-alcohols, such as methanol, ethanol, propanol, isopropanol, heptanol, octanol, isooctanol or phenol, or polyols, such as glycerol or polyglycols, commercially available, for example, as Exxal® series (ExxonMobil), Agrisynth® PA (ISP), Arcosolv® series (Lyondell Chemical) or Nacol® 6-98 (DEA). Examples of amines are diethylamine, hexylamine or aniline. Examples of carboxylic acids are adipic acid and adipic acid monoesters.

Fatty acid esters includes those of natural origin (which include but is not limited to natural oils, such as animal oils or vegetable oils) or of synthetic origin (which includes but is not limited to the Edenor® series, for example Edenor® MEPa or Edenor® MESU, or the Agnique® ME series or Agnique® AE series (Cognis), the Salim® ME series (Salim), the Radia® series, for example Radia® 30167 (ICI), the Prilube® series, for example Prilube® 1530 (Petrofina), the Stepan® C series (Stepan) or the Witconol®23 series (Witco)). The fatty acid esters are preferably esters of C₁₀-C₂₂-, with preference C₁₂-C₂₀-fatty acids..The C₁₀-C₂₂-fatty acid esters are, for example, esters of unsaturated or saturated C₁₀-C₂₂-fatty acids, in particular those having an even number of carbon atoms, for example erucic acid, lauric acid, palmitic acid, and in particular C₁₈-fatty acids, such as stearic acid, oleic acid, linoleic acid or linolenic acid.

Animal oils are generally known and commercially available. For the purpose of the present invention, the term "animal oils" is to be understood as meaning, for example, oils of animal origin such as whale oil, cod-liver oil, musk oil or mink oil.

Vegetable oils are generally known and commercially available. For the purpose of the present invention, the term "vegetable oils" is to be understood as meaning, for example, oils of oleaginous plant species, such as soybean oil, rapeseed oil, corn oil, sunflower oil, cottonseed oil, linseed oil, coconut oil, palm oil, thistle oil, walnut oil, arachis oil, olive oil or castor oil, in particular rapeseed oil, where the vegetable oils also include their transesterification products, for example alkyl esters, such as rapeseed oil methyl ester or rapeseed oil ethyl ester.

The vegetable oils are preferably esters of C₁₀-C₂₂-, preferably C₁₂-C₂₀-fatty acids. The C₁₀-C₂₂-fatty acid esters are, for example, esters of unsaturated or saturated C₁₀-C₂₂-fatty acids having, in particular, an even number of carbon atoms, for example erucic acid, lauric acid, palmitic acid and in particular C₁₈-fatty acids such as stearic acid, oleic acid, linoleic acid or linolenic acid.

The vegetable oils can be in the form of commercially available vegetable oils, in particular rapeseed oils, such as rapeseed oil methyl ester, for example Phytorob® B (Novance, France), Edenor® MESU and the Agnique® ME series (Cognis, Germany) the Radia® series (ICI), the Prilube® series (Petrofina), or biodiesel or in the form of commercially available plant-oil-containing formulation additives, in particular those based on rapeseed oils, such as rapeseed oil methyl esters, for example Hasten® (Victorian Chemical Company, Australia, hereinbelow referred to as Hasten, main ingredient: rapeseed oil ethyl ester), Actirob® B (Novance, France, hereinbelow referred to as Actirob B, main ingredient: rapeseed oil methyl ester), Rako-Binol® (Bayer AG, Germany, hereinbelow referred to as Rako-Binol, main ingredient: rapeseed oil), Renol® (Stefes, Germany, hereinbelow referred to as Renol, vegetable oil ingredient: rapeseed oil methyl ester) or Stefes Mero® (Stefes, Germany, hereinbelow referred to as Mero, main ingredient: rapeseed oil methyl ester).

Examples of synthetic fatty acid esters include but are not limited to those derived from fatty acids having an odd number of carbon atoms, such as C₁₁-C₂₁-fatty acid esters.

The solvents may be present as a single solvent or as a mixture of solvents.

The anti-settling agent includes but is not limited to silica, an organic bentonite (bentonite-alkylamino complex), bentonite, white carbon or aluminum magnesium silicic acid. Optionally, two or more of them may be suitably used in combination.

The thickener includes but is not limited to a heteropolysaccharide such as xanthan gum or guar gum, a water-soluble polymer such as polyvinyl alcohol, a sodium salt of carboxymethyl cellulose or sodium alginate, bentonite or white carbon. Optionally, two or more of them may suitably be used in combination.

The antifreezing agent includes but is not limited to ethylene glycol, propylene glycol, glycerin or urea. Optionally, two or more of them may suitably be used in combination.

The oil-absorber includes but is not limited to silicon dioxide, hydrolyzed starch, kaoline, clay, talc, diatomaceous earth, a synthesized product of diatomaceous earth/lime, asbestos, a mixture of kaolinite and sericite, calcium silicate, calcium carbonate, calcium carbonate silicate, acid clay, carbon black, graphite, a pearlite processed product, alumina, titanium dioxide, basic magnesium carbonate, magnesium silicate aluminate, silica-alumina filler or magnesium silicate hydrate. Optionally, two or more of them may suitably be used in combination.

The gelling agent includes but is not limited to silica, organic attapulgite, clay, hydrogenated castor oil, a higher fatty acid ester, a higher alcohol, a salt of dialkyl sulfosuccinic acid ester, a benzoate, an alkyl sulfate, a poly acrylic polymer, or a mixture of a poly acrylic acid co-polymer and water, or 12-hydroxystearic acid. Optionally, two or more of them may suitably be used in combination.

The binder includes but is not limited to lignin sulfonic acid, xanthan gum, carboxymethylcellulose or starch. Optionally, two or more of them may suitably be used in combination.

The stabilizer includes but is not limited to urea.

The disintegrator includes but is not limited to a calcium salt of carboxymethylcellulose, an inorganic salt such as ammonium sulfate, potassium chloride or magnesium chloride, and one showing a disintegrating activity among the above-mentioned surfactants, such as sodium lauryl sulfate, sodium dodecylbenzene sulfonate, or an ammonium polyacrylate. Optionally, two or more of them may suitably be used in combination.

The preservative includes but is not limited to formalin, p-chloro, m-xylenol or 1, 2-benzisothiazolin-3-one. Optionally, two or more of them may suitably be used in combination. In such formulations, the alkylenediol-modified siloxanes can act also as emulsifiers and dispersants for organic or inorganic particles, alone or in combination with other emulsifiers or dispersants.

The method of this invention can be used for liquid and solid agrochemical compositions. They can be used in spray tank mixes, pesticide formulations, adjuvant blends, and in applications where the silicone surfactant is administered in.a sequential addition after the application of the herbicide, such as disclosed in U.S. Patent No. 5,985,793 and U.S. Patent No. 5,821,195.

Typical agrochemical formulations comprising alkylenediol-modified siloxanes according to this invention and effective amounts of agrochemically active ingredients may comprise, for example, about 0.01 to about 50% of alkylenediol-modified siloxane(s), preferably about 0.025 to about 20% alkylenediol-modified siloxane by weight of the total formulation.

If containing additional co-surfactants, typical adjuvant formulations comprising siloxanes according to this invention can comprise about 1 to about 99% by weight of alkylenediol-modified siloxane(s) and 0 to about 99% of co-surfactant(s), preferred about 10 to about 70% by weight of alkylenediol-modified siloxane(s) and about 30 to about 90% of co-surfactant(s), especially preferred about 25 to about 50% alkylenediol-modified siloxane(s) and about 50 to about 75% co-surfactant(s).

Formulations comprising solvents may comprise, but are not limited to, for example:

| Component | % by w/w/ |
|---|---|
| Solvent | 1% to 90% |
| Pesticide | 1% to 90% |
| Silicone alkylenediol-modified polysiloxane | 1% to 50% |

Water based dispersion utilizing the silicone alkylenediol-modified polysiloxane can also be prepared. A typical aqueous formulation may comprise, but is not limited to, for example:

| Component | % by w/w/ |
|---|---|
| Water | 1% to 90% |
| Propylene glycol | 0% to 5% |
| Suspension agent | 0% to 5% |
| Bactericide | 0% to 1% |
| Pesticide | 1 to 80% |
| Silicone alkylenediol-modified polysiloxane | 0.05% to 10% |

The invention is further described by the following non-limiting examples which further illustrate the invention, and are not intended, nor should they be interpreted to, limit the scope of the invention.

### EXAMPLES

### Alkylenediol-modified siloxanes:

### ADS-1 (chain length of eight silicone units):

In a 500 ml four-necked flask equipped with KPG stirrer, dropping funnel, intensive condenser and nitrogen blanketing 92.4 g of Golpanol^{®} BEO (BASF, butynediol etherified with about 2.2 mol of ethylene oxide, mw. 183 g/mol) together with 50.0 g of a pendant hydrogen siloxane (SiH content: 2.02 eq/kg) are heated to 140°C with stirring and a catalyst consisting of H₂PtCl₆-6H₂O and RuCl₃·H₂O in isopropanol (corresponding to 10 ppm of Pt and 10 ppm of Ru based on the overall batch) is added. Within 40 min, the rest of the SiH-siloxane (200 g) is added and the reaction kept at 140°C for about 120 minutes. Volumetric gas analysis on a sample confirms the quantitative SiH conversion.

A clear, brownish liquid having a viscosity of 121 mPas at 25°C is isolated.

### ADS-2 (chain length of eight silicone units):

In a 250 ml four-necked flask equipped with KPG stirrer, dropping funnel, intensive condenser and nitrogen blanketing 63.0 g of Pluriol A.308R (BASF, butynediol etherified with about 5 mol of ethylene oxide, mw = 338 g/ Mol) together with 15.0 g of a pendant hydrogen siloxane (SiH content: 2.26 eq/kg) are heated to 140°C with stirring and a catalyst consisting of H₂PtCl₆·6H₂O and RuCl₃·H₂O in isopropanol (corresponding to 10 ppm of Pt and 10 ppm of Ru based on the overall batch) is added. Within 60 min, the rest of the SiH-siloxane (60 g) is added and the reaction kept at 140°C for about 60 minutes. Volumetric gas analysis on a sample confirms the quantitative SiH conversion.

A clear, amber-colored liquid having a viscosity of 172 mPas at 25°C is isolated.

For comparative purposes, two different trisiloxane ethoxylate surfactants were used:
TSE-1 is a commercial superspreading trisiloxane ethoxylate sold by Goldschmidt Chemical Corporation under the name 'Break-Thru S 240'. TSE-2 is a commercial non-spreading trisiloxane ethoxylate sold by Goldschmidt Chemical Corporation under the name 'Break-Thru S 233'.

### Example 1 - Efficacy enhancements of fungicides by alkylenediol-modified polysiloxane surfactants

A field trial was carried out in winter wheat where ADS-1 and ADS-2 were sprayed at 0.25 l/ha in 300 1/ha water tank mixed with 0.75 1/ha of a fungicide (Opus Top of the company BASF, which contains 84 g/l epoxiconazole plus 250 g/l fenpropimorph as actives). This mixture was sprayed with nozzles to the crop at wheat growth stage 32-33 and again at growth stage 51-55. Break-Thru S233 (a commercial trisiloxane surfactant without spreading properties manufactured by Goldschmidt at 0.25 l/ha was used as internal adjuvant standards for comparison. Several assessments were carried out of the diseased leaf area, at different days after the applications. The main disease in this trial was *Septoria tritici ,* which was assessed in terms of % infected leaf area for leaves F-3, F-1 and F. For the grain filling period of wheat, and thus for the yields, it is important to protect the leaves F-1 and F (the flag leaf).

**Table 1: Control of wheat diseases**

| Treatment | Dose | Diseased Leaf Area* | |
|---|---|---|---|
| | | 29 DAT1 | 24 DAT2 |
| | 1/ha | Leaf F-3 | Leaf F |
| Untreated | - | 16.3 a | 6.5 a |
| Fungicide | 0.75 | 15.5 a | 5.3 a |
| Fungicide + TSE-2 | 0.75 + 0.25 | 11.0 bcd | 4.8 a |
| Fungicide + ADS-1 | 0.75 + 0.25 | 8.0 d | 0.0 b |
| Fungicide + As-2 | 0.75 + 0.25 | 7.5 d | 0.0 b |

| | | | |
|---|---|---|---|
| DAT1: days after first treatment; DAT2: days after second treatment; Leaf F: Flag leaf; Leaf F-1: Leaf below the flag leaf; Leaf F-3: third leaf below flag leaf. | | | |

The lower the diseased leaf area in the table of results, the more effective was the treatment. The results show that addition of the alkylenediol-modied polysiloxane surfactants to fungicides significantly enhance the efficacy of the pesticides and that they are more active in improving the disease control by the pesticides than the trisiloxane ethoxylate surfactant.

### Example 2: Efficacy enhancements of fungicides by alkylenediol-modified polysiloxane surfactants

A greenhouse experiment to study the effect of ADS on Amistar (SC 250 g/l azoxystrobin) for the control of the powdery mildew disease in barley, was carried out at the University of Giessen, Germany. Barley cultivar "Ingrid" (3 plants/pot) was grown for three weeks in a "Frustosoil". The plants were sprayed with the treatments (see table of results) using 250 l/has spray solution containing Amistar (250 g/l SC azoxystrobin) or/and 50 ml/ha of the adjuvant as indicated in the table of results. Two days after application 8 cm long leaf segments were cut from the plants and were placed onto benzimidazole agar (0.5 % agar to which 40 ppm benzimidazole was added after sterilisation). The leaves were then inoculated with fresh conidia of *Blumeria graminis f.sp. hordei* (race A6) using an inoculation tower. After 7 and 14 days of incubation at room temperature the powdery mildew disease was assessed by estimating the percent infected leaf area. 13 replicated were used per treatment.

**Table 2: Results of infected leaf area of barley with powdery mildew caused by Blumeria graminis, at 7 and 14 days after application (DAA) (Data are means of 13 replicates with standard deviations)**

| Treatment | Infection (%) of leaves at 7 DAA | Infection (%) of leaves at 14 DAA |
|---|---|---|
| Untreated | 99±1 | 100±0 |
| 50 ml/ha ADS-1 | 98±2 | 100±0.7 |
| Amistar 15 g/ha | 28±12 | 41±14.3 |
| Amistar 15 g/ha+50 ml ADS-1 | 9±5.3 | 17±9.8 |

It is clear from the results that ADS-1 significantly improved the efficacy of the commercial fungicide. In addition, because the adjuvant did not have any efficacy on its own it has been demonstrated that there was a synergistic effect between the pesticide and the adjuvant. This can also be calculated by first calculating the efficacy values, and then apply the Colby formula. This demonstrates that the obtained efficacy of the combination (83% reduction of disease at 14 DAA) is higher than the expected efficacy, which is 59% for Amistar plus 0% for ADS-1.

### Example 3 - Hydrolytic stability at extreme pH values

Hydrolytic stability was measured in 0.1% buffer solution (pH 3:0.1M C₆H₈O₇/NaOH/NaCl, pH 11: 0.1 M Boric acid/KCl/NaOH).

Stability was measured by measuring the dynamic surface tension of the solution using a tensiometer of the type 'SITA pro line f10' at 0.1 Hz and a bubble lifetime of 5000 ms. Hydrolysis of the siloxane results in fragments with reduced surface activity and therefore an increase in surface tension.

**Table 3: Change of dynamic surface tension (at different pH values, in mN/m )**

| | **ADS-2** | | **TSE-1** | |
|---|---|---|---|---|
| base | 28.7 | | 22.0 | |
| value | (H₂O, pH 7) | | (H₂O, pH 7) | |
| | | | | |

| **Time** | pH 3 | pH 11 | pH 3 | pH 11 |
|---|---|---|---|---|
| 1h | 29.0 | 31.4 | 24.7 | 24.8 |
| 2h | 23.3 | 28.1 | 31.7 | 37.5 |
| 3h | 28,0 | 27.5 | 48.4 | 48.8 |
| 4h | 27.9 | 26.5 | 51.4 | 49.0 |

These results demonstrate that trisiloxane ethoxylate surfactants start to degrade at extreme pH values almost immediately (as shown by the increasing surface tension) while the alkylenediol-derived surfactants are stable and unchanged.

### Example 4: Defoaming properties of alkylene-diol-modified surfactants

Foaming was measured in a circulatory foam cell using a graduated cylinder (100 mm diameter, 600 mm height, outlet to pump at the bottom, inlet from the top, pump rate 13 l/min). Defoaming efficiency is indicated by lower foam height and longer times until foam build-up.

**Table 4: Defoaming test data**

| Trisiloxane ethoxylate | conc. (in water) | alkylenediol modif. siloxane | conc. | Foam height reached |
|---|---|---|---|---|
| - | - | ADS-1 | 0.1% | no foam |
| TSE-1 | 0.1 % | - | - | 30cm foam after 57sec |
| TSE-1 | 0.1% | ADS-1 | 0.05% | 20 cm after 10 min |

These results show that alkylene diol surfactants do not create undesired foam and that the addition of even small amounts have a foam-suppressing effect when combined with other surfactants such as trisiloxane ethoxylates.

### Example 5: Defoaming properties of alkylene-diol-modifted surfactants in pesticide formulations

A pesticide formulation ("concentrate") was prepared from glyphosate isopropylammonium salt, an organic cosurfactant (Varonic T 215, a fatty amine ethoxylate manufactured by Goldschmidt Chemical Corporation), water, and either an alkylenediolmodified siloxane (ADS-1) or trisiloxane ethoxylate (TSE-1 and TSE-2). A dilution was prepared from 0.4 g of concentrate and 20 g of deionized water.

Foam properties were tested in a 40 ml screwcap glass vial. The sample (concentrate and dilution) were shaken for 10 seconds and the decrease in foam height monitored.

**Table 5: Formulations for foam testing**

| Comparison formulation 1 | | | |
|---|---|---|---|
| Glyphosate IPA Salt | | 66.0% w/w | |
| Organic Surfactant | | 8.0% w/w | |
| Deionized water | | 26.0% w/w | |
| | | | |

| Formulation A (with alkylenediol-modified siloxane) | | | |
|---|---|---|---|
| Glyphosate IPA Salt | | 66.0% w/w | |
| Organic Surfactant | | 8.0% w/w | |
| Deionized water | | 25.85% w/w | |
| ADS-1 | | 0.15% w/w | |
| | | | |

| Comparison formulation 2 (with trisiloxane ethoxylate) | | | |
|---|---|---|---|
| Glyphosate IPA Salt | | 66.0% w/w | |
| Organic Surfactant | | 8.0% w/w | |
| Deionized water | | 25.85% w/w | |
| TSE-1 | | 0.15% w/w | |
| | | | |

| Comparison formulation 3 (with trisiloxane ethoxylate) | | | |
|---|---|---|---|
| Glyphosate IPA Salt | | 66.0% w/w | |
| Organic Surfactant | | 8.0% w/w | |
| Deionized water | | 25.85% w/w | |
| TSE-2 | | 0.15% w/w | |

**Table 6: Foam test results with pesticide formulations**

| Formulation | mm Foam height, formulated concentrate | | | mm Foam height, diluted formulation | | |
|---|---|---|---|---|---|---|
| | 2 minutes | 5 minutes | 12 minutes | 2 minutes | 5 minutes | 12 minutes |
| Formulation A | 0 | 0 | 0 | 11 | <1 | 0 |
| Comparison 1 | 19 | 10 | 10 | 38 | 16 | 1 |
| Comparison 2 | 2 | 0 | 0 | 51 | 16 | 5 |
| Comparison 3* | 5 | 0 | 0 | 57 | 38 | 16 |

| | | | | | | |
|---|---|---|---|---|---|---|
| *hazy solution | | | | | | |

This demonstrates that alkylenediol-modified surfactants efficiently reduce the foam formation and accelerate the foam destruction of pesticide formulations containing organic surfactants while trisiloxane ethoxylates show a lesser effect, or in diluted systems actually increase the foam problems.

### Example 6: Efficacy enhancements of herbicides by alkylenediol-modified polysiloxane surfactants

Two alkylenediol-modified polysiloxane surfactants, ADS-1 and ADS-2 were evaluated in field trials with the total weed herbicide glyphosate (360 g a.e./1 glyphosate Roundup Classic from Monsanto). The TSE-1, a commercial trisiloxane surfactant recommended for herbicide applications, was included in the tests as benchmark. The surfactants used at 100 and 200 ml/ha were applied with 100 l/ha spray water together (tank mixed) with different recommended doses per ha of Roundup Classic. To test whether the tank-mixed applied surfactants improve the resistant of the herbicide against 'wash-off' (indication for rainfastness improvement), in one test 4 mm rainfall were simulated by application of water with a high throughput nozzle, one hour after spraying the products.

The perennial weed species tested were *Cyperus rotundus* (purple nutsedge), as a representant of the monocotyledoneous weeds, and *Senna tora* (sickle senna), a representant of the dicotylendoneous broad leaves weeds. Visual percent post control rating was taken at 21 to 30 days after application from each of the 4 times replicated plots. Statistical calculations were done on the means.

**Table 7: Control of Cyperus rotundus, at 30 days after treatment**

| Treatment | Dose per ha | Control (%)* |
|---|---|---|
| Glyphosate | 1080 g ae/ha | 68.3 g |
| | | |
| Glyphosate+ADS 1 | 1080 g ae/ha + 0.2 l/ha | 86.7 cde |
| Glyphosate+ADS 1 | 1080 g ae/ha + 0.1 l/ha | 81.7 f |
| | | |
| Glyphosate+ADS 2 | 1080 g ae/ha + 0,2 l/ha | 86.7 cde |
| Glyphosate+ADS 2 | 1080 g ae/ha + 0.1 l/ha | 83.3 efg |
| | | |
| Glyphosate+TSE 1** | 1080 g ae/ha + 0.2 l/ha | 86.7 fg |
| Glyphosate+TSE 1 | 1080 g ae/ha + 0.1 l/ha | 85.0 def |
| | | |
| Glyphosate | 1440 g ae/ha | 86.7 cde |
| | | |
| Glyphosate+ADS 1 | 1440 g ae/ha + 0.2 l/ha | 93.3 ab |
| Glyphosate+ADS 1 | 1440 g ae/ha + 0.1 l/ha | 88.3 cd |
| | | |
| Glyphosate+ADS 2 | 1440 g ae/ha + 0.2 l/ha | 88.3 cd |
| Glyphosate+ADS 2 | 1440 g ae/ha + 0.1 l/ha | 88.3 cd |
| | | |
| Glyphosate+TSE 1 | 1440 g ae/ha + 0.2 l/ha | 933 ab |
| Glyphosate+TSE 1 | 1440 g ae/ha + 0.1 l/ha | 90.0 bc |

| | | |
|---|---|---|
| * Higher % control values indicate higher efficacy. Numbers having a letter in common are statistically not significantly different (P=0.05) | | |

These results demonstrate that alkylenediol-modified siloxanes can be used as adjuvants to an enhance the efficacy of pesticides, e.g. herbicides, showing that a lower dose rate of herbicide with adjuvant can be as efficient as the higher dose rate of herbicide without adjuvant. Also it is demonstrated that the alkylenediol-modified siloxanes are as efficient as adjuvants as the widely used commercial trisiloxane ethoxylates.

**Table 8: Control of Senna tora, at 30 days after treatment**

| Treatment | Dose per ha | Control (%)* |
|---|---|---|
| Without rain aftertreatment | | |
| Glyphosate | 720 g ae/ha | 96.0 a |
| | | |
| Glyphosate+ADS 1 | 720 g ae/ha + 0.2 l/ha | 97.0 a |
| Glyphosate+ADS 1 | 720 g ae/ha + 0.1 l/ha | 97.0 a |
| | | |
| Glyphosate+ADS 2 | 720 g ae/ha + 0,2 l/ha | 97.0 a |
| Glyphosate+ADS 2 | 720 g ae/ha + 0.1 l/ha | 95.0 a |
| | | |
| Glyphosate+TSE 1** | 720 g ae/ha + 0.2 l/ha | 97.0 a |
| Glyphosate+TSE 1 | 720 g ae/ha + 0.1 l/ha | 96.0 a |
| | | |
| With 4 mm rain aftertreatment | | |
| Glyphosate | 720 g ae/ha | 75.0 d |
| | | |
| Glyphosate+ADS 1 | 720 g ae/ha + 0.2 l/ha | 93.3 ab |
| Glyphosate+ADS 1 | 720 g ae/ha + 0.1 l/ha | 91.7 b |
| | | |
| Glyphosate+ADS 2 | 720 g ae/ha + 0.2 l/ha | 93.3 ab |
| Glyphosate+ADS 2 | 720 g ae/ha + 0.1 l/ha | 93.3 ab |
| | | |
| Glyphosate+TSE 1** | 720 g ae/ha + 0.2 l/ha | 93.3 ab |
| Glyphosate+TSE 1 | 720 g ae/ha + 0/1 l/ha | 86.7 c |

| | | |
|---|---|---|
| *numbers with the same letter are statistically not significant different (P=0.05) | | |

These results demonstrate that alkylenediol-modified siloxanes can be used as adjuvants to enhance the efficacy of herbicides under conditions of rainfall, and thus enhance the rainfastness. Also it is demonstrated that they are as or even more efficient than widely used trisiloxane commercial surfactants.

### Example 7 - Formulation comprising atkylene-diol-modified surfactants and solvents

The silicone alkylenediol-modied polysiloxane was added to Aromatic 150, (ExxonMobil, Houston Texas) The concentration of the surfactant in the formulation was 3.0%w/w. The surfactant readily dissolved in the solvent. One gram of this mixture was added to 24 grams of distilled water yielding a 4%w/w emulsion The emulsion was stable over a 24 observation period.

The silicone alkylenediol-modied polysiloxane was added to Isopar M, (ExxonMobil, Houston Texas) The concentration of the surfactant in the formulation was 2.1 %w/w. The surfactant readily dissolved in the solvent. One gram of this mixture was added to 20 grams of distilled water yielding a 5% emulsion The emulsion was stable over a 24 observation period.

The silicone alkylenediol-modied polysiloxane was added to Aromatic 200 naphthalene depleted (ExxonMobil, Houston Texas) The concentration of the surfactant in the formulation was 3.0%w/w. The surfactant readily dissolved in the solvent. One gram of this mixture was added to 20 grams of distilled water yielding a 5% emulsion The emulsion was stable over a 24 observation period.

These results demonstrate that alkylenediol-modified surfactants may act as emulsifiers, coemulsifiers or solubilizers in formulations comprising solvents.

### Example 8 - Formulation comprising alkylene-diol-modified surfactants and plant nutrients

A plant nutrient formulation was prepared utilizing alkylenediol-modiifed surfactants:

| | |
|---|---|
| Boric Acid (US Borax) | 51.0% |
| Water | 48.68% |
| ADS-1 | 0.15% |
| xanthan gum | 0.17% |

The surfactant is added to the water, then the solid nutrient is added and dispersed.

In contrast to a comparison formulation without ADS, the dispersion of the plant nutrient comprising ADS can be prepared without formation of foam or entrainment of air, and is physically stable at room temperature without sedimentation, without the need for additional dispersing additives or defoamers.

These results demonstrate that alkylendiol-modified siloxanes do not foam, reduce entrapped air, improve the generation and stability of dispersions, and may be beneficially used in compositions comprising plant nutrients.

### Example 9 - Formulation comprising alkylene-diol-modified surfactants and insecticides

A pesticide formulation was prepared from an insecticide, a solvent and an alkylene-modifed diol.

| | |
|---|---|
| Insecticide: Bifenthrin (Amvac, 100%) | 12.5% w/w |
| Solvent, Nusolv ABP - 103 | 77.5% w/w |
| ADS-1 | 10.0% w/w |
| Total | 100.0% w/w |

The insecticide was placed in a 40 ml vial, solvent added and the vial heated in a microwave (full power, 10 seconds at a time) until all active is dissolved. After cooling, the ADS is added.

To test the emulsification properties, 2.5 grams of product were added to approximately 97.5 ml of either deionized or 370 ppm hardness water. The sample does not spontaneously emulsify upon addition to water. A large number of oil droplets are visible. Invert and bring cylinder back to upright position 20 times approximately one inversion every 1 to 2 seconds. After 20 inversions place cylinder on bench and record observations.

The formulation forms a homogeneous grey emulsion, without any foam.

A comparison formulation without ADS separates immediately into oil and water phase.

These results demonstrate that alkylenediol-modified siloxanes have emulsifying properties and may be beneficially used in formulations with pesticides.

### Example 10 - Herbicide formulations comprising alkylene-diol modified surfactants

Greenhouse trials were carried out where the effect of A.DS-1 on the efficacy of the sulfonylurea herbicides nicosulfuron (4.2% SC Motivell from BASF) and rimsulfuron (25% WG Cato from Dupont) for grass weed control was tested. Seed of the grass *Poa pratensis* (meadowgrass or Kentucky blue grass) was densly sown in pots and grown for 6 weeks until reaching a height of about 25 cm. The herbicides were then applied with a spray nozzle using 2001/ha spray solution and doses as given in the table of results. The herbicides were tank mixed with the adjuvant ADS-1 at doses given also in the table. 15 days after treatment, the efficacy of each treatment was assessed in comparison to the untreated control. Researchers trained in the art have knowledge about such technology, and about the method of assessment.

**Table 9: Efficacy (%) of nicosulfuron (Motivell) alone and in combination with the test adjuvant**

| Treatment | Dose/ha | % Control at 20 days¹ |
|---|---|---|
| Untreated | - | 0 |
| ADS-1 | 50 ml | 0 |
| ADS-1 | 100 ml | 0 |
| | | |
| Nicosulfuron | 25 ml Motivell | 87 ± 3 |
| Nicos. + ADS-1 | 25 + 50 ml | 97 ± 3 |
| Nicos. + ADS-1 | 25 + 100 ml | 98 ± 3 |

| | | |
|---|---|---|
| ¹ Mean of 3 replicates ± standard deviation | | |

**Table 10: Efficacy (%) of rimsulfuron (Cato) alone and in combination with the test adjuvant**

| Treatment | Dose/ha | % Control at 20 days¹ |
|---|---|---|
| Untreated | - | 0 |
| ADS-1 | 50 ml | 0 |
| ADS-1 | 100 ml | 0 |
| | | |
| Rimsulfuron | 10 g Cato | 43 ± 6 |
| Rims. + ADS-1 | 10 g + 50 ml | 83 ± 6 |
| Rims. + ADS-1 | 10 g + 100 ml | 92 ± 3 |

| | | |
|---|---|---|
| ¹ Mean of 3 replicates ± standard deviation | | |

The results show that alkylenediol-based siloxanes do not have any herbicidal efficacy on its own but surprisingly increased significantly the efficacy of sulfonyl herbicides even at a dose rate as low as 50 ml/ha.

## Claims

1. An agrochemical composition comprising one or more agrochemical active ingredient(s) and one or more alkylenediol-modified polysiloxanes of formula (I): 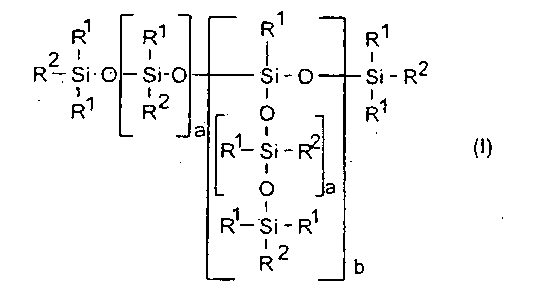 wherein
R¹ are alkyl radicals having 1 to 4 carbon atoms or aryl radicals, wherein at least 80% of the radicals R¹ are methyl radicals,
R² in the molecule are identical or different and can have the following definitions:
A) 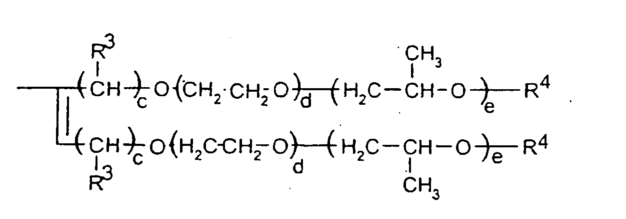 in which
R³ is a hydrogen or C₁-C₂₀ linear or branched alkyl radical,
R⁴ is a hydrogen, alkyl or carboxyl radical,
c is a number from 1 to 20,
d is a number from 0 to 50,
e is a number from 0 to 50;
or
B) correspond to the radical R¹,
with the proviso that in the average molecule at least one radical R² has the definition (A),
a is a number selected from the group of ranges consisting of 1 to 200, 1 to 50, and 2 to 20; and
b is a number selected from the group consisting of 0 to 10, a number < 5, and 0; and
optionally one or more other agrochemically acceptable ingredients.

2. The composition of claim 1, wherein the active ingredient is a plant nutrient or a pesticide selected from the group consisting of acaricides (AC), algicides (AL), attractants (AT), repellents (RE), bactericides (BA), fungicides (FU), herbicides (HB), insecticides (IN), molluscicides (MO), nematicides (NE), rodenticides (RO), sterilants (ST), viricides (VI) plant growth regulators (PG) and mixtures thereof.

3. The composition of claim 2, wherein the herbicide is a sulfonylurea, glyphosate or a salt thereof.

4. The composition of claim 1, wherein the alkylenediol-modified polysiloxanes of formula (I) has the fomula R¹₃Si-O-[SiR¹₂-O]ₘ-[SiR¹R²-O]ₙ-SiR¹₃,
wherein R¹ is methyl, R² has definition A), R³ and R⁴ is hydrogen, c is 1, d is I to 5, e is 0-2, m is 2-8 and n is 1-3.

5. The composition of claim 1, wherein the optionally one or more agrochemically acceptable ingredients is selected from the group consisting of anionic surfactants, nonionic surfactants, cationic surfactants, amphoteric surfactants, stickers, carrier, defoamers, solvents and mixtures thereof.

6. The composition of claim 5, wherein the surfactant is selected from the group consisting of alcohol alkoxylates and their derivatives, alkyl aryl alkoxylates and their derivatives, alkoxylated amides, alkoxylated fatty acids, alkoxylated fatty esters and oils, glycerol esters, alkoxylated glycerol esters, phosphate esters, mono- and di-glycerides, polyoxyalkylene copolymers, trisiloxane surfactants, siloxane surfactants, sorbitan esters, ethoxylated sorbitan esters, polyoxyalkylene rosin ester, polyhydroxy fatty acid amides, alkanolamides, fatty amides of sugars and alkyl glucosides, alkyl glucosides, alkyl polyglucosides, sucrose esters, fatty amines, di-fatty quaternary amines, tri-fatty quaternary amines, imidazolinium quaternary amines, alkoxylated amines, quaternary ammonium surfactants, alkoxylated quaternary ammonium surfactants and their derivatives, alkoxylated imidazolines and their derivatives, propoxylated quaternary amines, alkyl and aryl sulfates and sulfonates, polyoxyalkyene alkylether sulfate, polyoxyalkylene alkylarylether sulfates, olefine sulfonates, alkylphosphates, polyoxyalkylene alkyl phosphates, fatty acids and salts thereof, alkyl glycinates, sulfonated methyl esters, sulfonated fatty acids, sulfosuccinates and their derivatives, acyl glutamates, acyl sarcosinates, alkyl sulfoacetates, alkyl ether carboxylates, anionic fluorosurfactants, amide ether sulfates, N-methyl fatty acid taurides, betaines, alkyl betaines, alkylamidoalkylbetaines, sulfobetaines, sultaines, hydroxysultaines, alkyliminoacetates, iminodialkanoates, aminoalkanoates, alkylammonium propionates, alkyliminoacetates, iminodialkanoates, amine oxides, and combinations thereof.

7. The composition of claim 1, wherein the composition is free of trisiloxane surfactants.

8. A method of enhancing the efficacy of an agrochemical composition which comprises of adding one or more alkylenediol-modified polysiloxanes of formula (I): 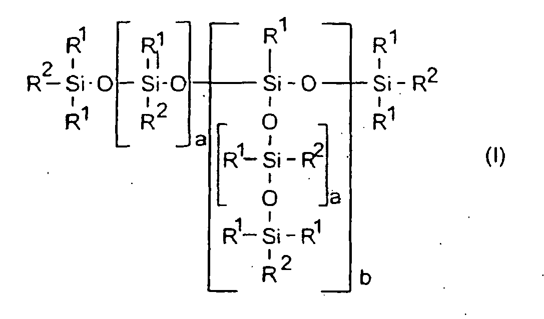 wherein
R¹ are alkyl radicals having 1 to 4 carbon atoms or aryl radicals, wherein at least 80% of the radicals R¹ are methyl radicals,
R² in the molecule are identical or different and can have the following definitions:
A) 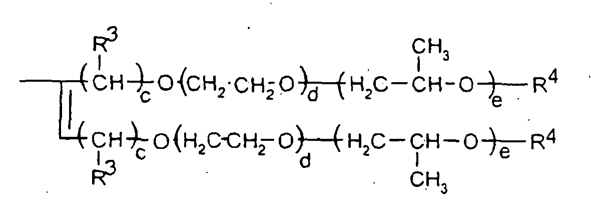 in which
R³ is a hydrogen or C₁-C₂₀ linear or branched alkyl radical,
R⁴ is a hydrogen, alkyl or carboxyl radical,
c is a number from 1 to 20,
d is a number from 0 to 50,
e is a number from 0 to 50
or
B) correspond to the radical R¹, with the proviso that in the average molecule at least one radical R² has the definition (A),
a is a number selected from the group of ranges consisting of 1 to 200, 1 to 50, and 2 to 20; and
b is a number selected from the group consisting of 0 to 10, a number < 5, and 0; and
to an agrochemical composition which comprises one or more one agrochemical active ingredient(s) and optionally one or more other agrochemically acceptable ingredients.

9. The method of claim 8, wherein the active ingredient is a pesticide selected from the group consisting of acaricides (AC), algicides (AL), attractants (AT), repellents (RE), bactericides (BA), fungicides (FU), herbicides (HB), insecticides (IN), molluscicides (MO), nematicides (NE), rodenticides (RO), sterilants (ST), viricides (VI) plant growth regulators (PG) and mixtures thereof or is a plant nutrient.

10. The method of claim 9, wherein the herbicide is a sulfonylurea, glyphosate or a salt thereof.

11. The method of claim 8, wherein the alkylenediol-modified polysiloxanes of formula (I) has the fomula R¹₃Si-O-[SiR¹₂-O]ₘ-[SiR¹R²-O]ₙ-SiR¹₃,
wherein R¹ is methyl, R² has definition A), R³ and R⁴ is hydrogen, c is 1, d is 1 to 5, e is 0-2, m is 2-8 and n is 1-3.

12. The method of claim 8, wherein the optionally one or more agrochemically acceptable ingredients is selected from the group consisting of anionic surfactants, nonionic surfactants, cationic surfactants, amphoteric surfactants, stickers, carriers, defoamers, and solvents.

13. The method of claim 8, wherein the composition is free of trisiloxane surfactants.

14. A method of reducing the foam of an agrochemical composition which comprises of adding one or more alkylenediol-modified polysiloxanes of formula (I): 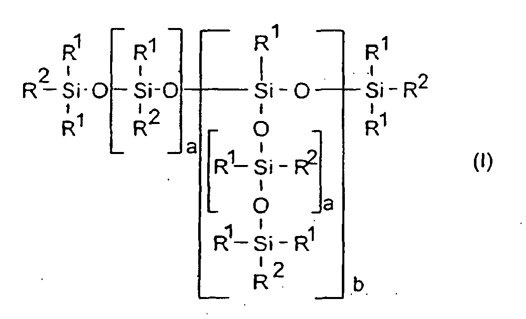 wherein
R¹ are alkyl radicals having 1 to 4 carbon atoms or aryl radicals, wherein at least 80% of the radicals R¹ are methyl radicals,
R² in the molecule are identical or different and can have the following definitions:
A) 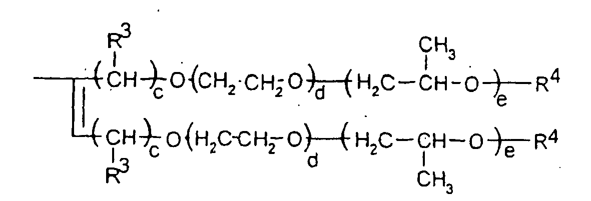 in which
R³ is a hydrogen or C₁-C₂₀ linear or branched alkyl radical,
R⁴ is a hydrogen, alkyl or carboxyl radical,
c is a number from 1 to 20,
d is a number from 0 to 50,
e is a number from 0 to 50;
or
B) correspond to the radical R¹, with the proviso that in the average molecule at least one radical R² has the definition (A),
a is a number selected from the group of ranges consisting of 1 to 200, 1 to 50, and 2 to 20; and
b is a number selected from the group consisting of 0 to 10, a number < 5, and 0; and
to an agrochemical composition which comprises one or more one agrochemical active ingredient(s) and optionally one or more other agrochemically acceptable ingredients.

15. The method of claim 14, wherein the active ingredient is a plant nutrient or a pesticide selected from the group consisting of acaricides (AC), algicides (AL), attractants (AT), repellents (RE), bactericides (BA), fungicides (FU), herbicides (HB), insecticides (IN), molluscicides (MO), nematicides (NE), rodenticides (RO), sterilants (ST), viricides (VI) plant growth regulators (PG) and mixtures thereof.

16. The method of claim 15, wherein the herbicide is a sulfonylurea, glyphosate or a salt thereof.

17. The method of claim 14, wherein the alkylenediol-modified polysiloxanes of formula (I) has the fomula R¹₃Si-O-[SiR¹₂-O]ₘ-[SiR¹R²-O]ₙ-SiR¹₃,
wherein R¹ is methyl, R² has definition A), R³ and R⁴ is hydrogen, c is 1, d is 1 to 5, , e is 0-2, m is 2-8 and n is 1-3.

18. The method of claim 14, wherein the optionally one or more agrochemically acceptable ingredients is selected from the group consisting of anionic surfactants, nonionic surfactants, cationic surfactants, amphoteric surfactants, stickers, carriers, defoamers, and solvents.

19. A method of dispersing solids in an agrochemical composition which comprises of adding one or more alkylenediol-modified polysiloxanes of formula (I): 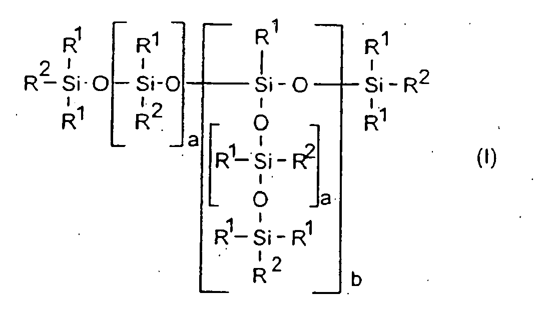 wherein
R¹ are alkyl radicals having 1 to 4 carbon atoms or aryl radicals, wherein at least 80% of the radicals R¹ are methyl radicals,
R² in the molecule are identical or different and can have the following definitions:
a) 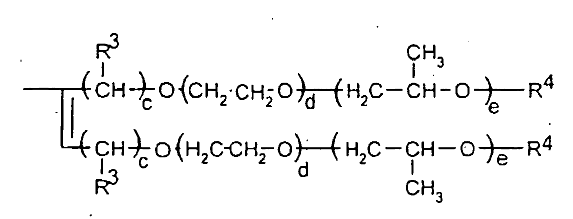 in which
R³ is a hydrogen or C₁-C₂₀ linear or branched alkyl radical,
R⁴ is a hydrogen, alkyl or carboxyl radical,
c is a number from 1 to 20,
d is a number from 0 to 50,
e is a number from 0 to 50;
or
b) correspond to the radical R¹, with the proviso that in the average molecule at least one radical R² has the definition (a),
a is a number selected from the group of ranges consisting of 1 to 200, 1 to 50, and 2 to 20; and
b is a number selected from the group consisting of 0 to 10, a number < 5, and 0; and
to an agrochemical composition which comprises one or more one solid agrochemically active ingredient(s) and optionally one or more other agrochemically acceptable ingredients.

20. The method of claim 19, wherein the solid active ingredient is a plant nutrient or a pesticide selected from the group consisting of acaricides (AC), algicides (AL), attractants (AT), repellents (RE), bactericides (BA), fungicides (FU), herbicides (HB), insecticides (IN), molluscicides (MO), nematicides (NE), rodenticides (RO), sterilants (ST), viricides (VI) plant growth regulators (PG) and mixtures thereof.

## Patentansprüche

1. Agrarchemikalienzusammensetzung umfassend einen oder mehrere agrarchemische (n) Wirkstoff(e) sowie ein oder mehrere alkylendiolmodifizierte(s) Polysiloxan (e) der Formel (I): 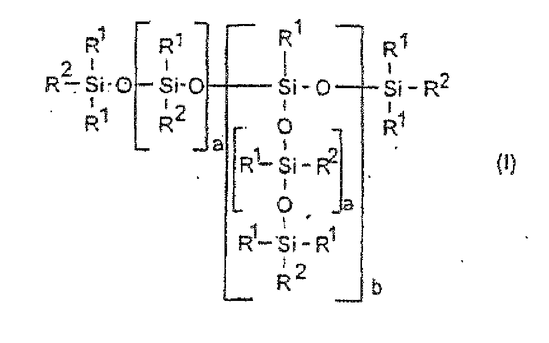 in der
R¹ Alkylreste mit 1 bis 4 Kohlenstoffatomen oder Arylreste, in denen mindestens 80% der R¹-Reste Methylreste bedeuten, bedeuten
R² in dem Molekül gleich oder verschieden sind und die folgenden Definitionen aufweisen können:
A) 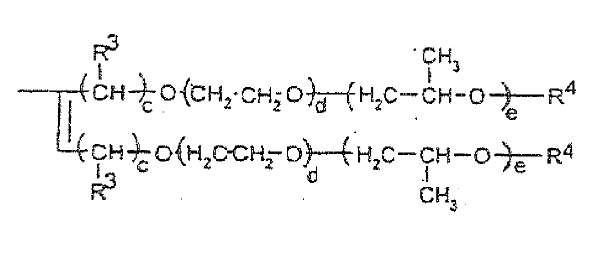 worin
R³ einen Wasserstoffrest oder einen geradkettigen oder verzweigten C₁-C₂₀- Alkylrest bedeutet,
R⁴ einen Wasserstoffrest, Alkylrest oder Carboxylrest bedeutet,
c eine Zahl von 1 bis 20 bedeutet,
d eine Zahl von 0 bis 50 bedeutet,
e eine Zahl von 0 bis 50 bedeutet,
oder
B) dem R¹-Rest entsprechen,
mit der Maßgabe, dass in dem durchschnittlichen Molekül mindestens ein R²-Rest der Definition (A) entspricht,
a eine Zahl aus der Gruppe der Bereiche 1 bis 200, 1 bis 50 und 2 bis 20 bedeutet; und
b eine Zahl aus der Gruppe bestehend aus 0 bis 10, eine Zahl <5 und 0 bedeutet; und
optional einen oder mehrere sonstige(n) argarchemisch annehmbare(n) Bestandteil(e).

2. Zusammensetzung nach Anspruch 1, wobei es sich bei dem Wirkstoff um einen Pflanzennährstoff oder ein Pestizid aus der Gruppe Akarizide (AC), Algizide (AL), Attractants (AT), Repellents (RE), Bakterizide (BA), Fungizide (FU), Herbizide (HB), Insektizide (IN), Molluskizide (MO), Nematizide (NE), Rodentizide (RO), Sterilantien (ST), Virozide (VI), Pflanzenwachstumsregulatoren (PG) und Mischungen davon handelt.

3. Zusammensetzung nach Anspruch 2, wobei es sich bei dem Herbizid um einen Sulfonylharnstoff, um Glyphosate oder um ein Salz davon handelt.

4. Zusammensetzung nach Anspruch 1, wobei die alkylendiolmodifizierten Polysiloxane der Formel (I) die Formel R¹₃Si-O-[SiR¹₂-O]ₘ-[SiR¹R²-O]ₙ-SiR¹₃ aufweisen,
in der R¹ Methyl bedeutet, R² der Definition A) entspricht, R³ und R⁴ Wasserstoff bedeuten, c 1 bedeutet, d 1 bis 5 bedeutet, e 0-2 bedeutet, m 2-8 bedeutet und n 1-3 bedeutet.

5. Zusammensetzung nach Anspruch 1, wobei der/die optionale(n) eine oder mehreren agrarchemisch annehmbare(n) Bestandteil(e) aus der Gruppe anionische Tenside, nichtionische Tenside, kationische Tenside, amphotere Tenside, Haftmittel, Träger, Antischaummittel, Lösungsmittel und Mischungen davon stammt.

6. Zusammensetzung nach Anspruch 5, wobei das Tensid aus der Gruppe Alkoholalkoxylate und ihre Derivate, Alkylarylalkoxylate und ihre Derivate, alkoxylierte Amide, alkoxylierte Fettsäuren, alkoxylierte Fettsäureester und Öle, Glycerinester, alkoxylierte Glycerinester, Phosphatester, Mono- und Diglyceride, Polyoxyalkylencopolymere, Trisiloxantenside, Siloxantenside, Sorbitanester, ethoxylierte Sorbitanester, Polyoxyalkylen-Rosin-Ester, Polyhydroxyfettsäureamide, Alkanolamide, Fettsäureamide von Zuckern und Alkylglucosiden, Alkylglucoside, Alkylpolyglucoside, Saccharoseester, Fettsäureamine, quartäre Amine von Difettsäuren, quartäre Amine von Trifettsäuren, quartäre Amine von Imidazolinium, alkoxylierte Amine, quartäre Ammoniumtenside, alkoxylierte quartäre Ammoniumtenside und ihre Derivate, alkoxylierte Imidazoline und ihre Derivate, propoxylierte quartäre Amine, Alkyl- und Arylsulfate und -sulfonate, Polyoxyalkylenalkylethersulfate, Polyoxyalkylenalkylarylethersulfate, Olefinsulfonate, Alkylphosphate, Polyoxyalkylenalkylphosphate, Fettsäuren und Salze davon, Alkylglycinate, sulfonierte Methylester, sulfonierte Fettsäuren, Sulfosuccinate und ihre Derivate, Acylglutamate, Acylsarcosinate, Alkylsulfoacetate, Alkylethercarboxylate, anionische Fluortenside, Amidethersulfate, N-Methyl-Fettsäuretauride, Betaine, Alkylbetaine, Alkylamidoalkylbetaine, Sulfobetaine, Sultaine, Hydroxysultaine, Alkyliminoacetate, Iminodialkanoate, Aminoalkanoate, Alkylammoniumpropionate, Alkyliminoacetate, Iminodialkanoate, Aminooxide und Kombinationen davon stammt.

7. Zusammensetzung nach Anspruch 1, wobei die Zusammensetzung trisiloxantensidfrei ist.

8. Verfahren zur Verbesserung der Wirksamkeit einer agrarchemischen Zusammensetzung, bei dem man eine agrarchemische Zusammensetzung, die einen oder mehrere agrarchemische(n) Wirkstoff(e) und optional einen oder mehrere sonstige(n) agrarchemisch annehmbare(n) Bestandteil(e) enthält, mit einem oder mehreren alkylendiolmodifizierten Polysiloxan(en) der Formel (I): 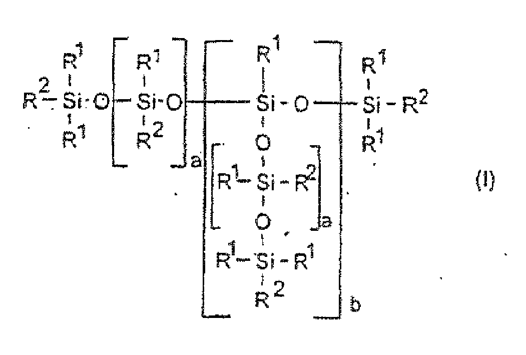 in der
R¹ Alkylreste mit 1 bis 4 Kohlenstoffatomen oder Arylreste, in denen mindestens 80% der R¹-Reste Methylreste bedeuten, bedeuten
R² in dem Molekül gleich oder verschieden sind und die folgenden Definitionen aufweisen können:
A) 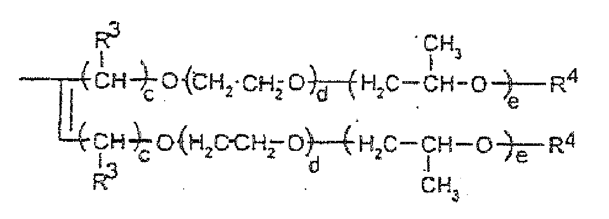 worin
R³ einen Wasserstoffrest oder einen geradkettigen oder verzweigten C₁-C₂₀- Alkylrest bedeutet,
R⁴ einen Wasserstoffrest, Alkylrest oder Carboxylrest bedeutet,
c eine Zahl von 1 bis 20 bedeutet,
d eine Zahl von 0 bis 50 bedeutet,
e eine Zahl von 0 bis 50 bedeutet,
oder
B) dem R¹-Rest entsprechen, mit der Maßgabe, dass in dem durchschnittlichen Molekül mindestens ein R²-Rest der Definition (A) entspricht,
a eine Zahl aus der Gruppe der Bereiche 1 bis 200, 1 bis 50 und 2 bis 20 bedeutet; und
b eine Zahl aus der Gruppe bestehend aus 0 bis 10, eine Zahl <5 und 0 bedeutet;
versetzt.

9. Verfahren nach Anspruch 8, wobei es sich bei dem Wirkstoff um ein Pestizid ausgewählt aus der Gruppe Akarizide (AC), Algizide (AL), Attractants (AT), Repellents (RE), Bakterizide (BA), Fungizide (FU), Herbizide (HB), Insektizide (IN), Molluskizide (MO), Nematizide (NE), Rodentizide (RO), Sterilantien (ST), Virozide (VI), Pflanzenwachstumsregulatoren (PG) und Mischungen davon oder um einen Pflanzennährstoff handelt.

10. Verfahren nach Anspruch 9, wobei es sich bei dem Herbizid um einen Sulfonylharnstoff, um Glyphosate oder um ein Salz davon handelt.

11. Verfahren nach Anspruch 8, wobei die alkylendiolmodifizierten Polysiloxane der Formel (I) die Formel R¹₃Si-O-[SiR¹₂-O]ₘ-[SiR¹R²-O]ₙ-SiR¹₃ aufweisen,
in der R¹ Methyl bedeutet, R² der Definition A) entspricht, R³ und R⁴ Wasserstoff bedeuten, c 1 bedeutet, d 1 bis 5 bedeutet, e 0-2 bedeutet, m 2-8 bedeutet und n 1-3 bedeutet.

12. Verfahren nach Anspruch 8, wobei der/die optionale(n) eine oder mehreren agrarchemisch annehmbare(n) Bestandteil(e) aus der Gruppe anionische Tenside, nichtionische Tenside, kationische Tenside, amphotere Tenside, Haftmittel, Träger, Antischaummittel und Lösungsmittel stammt.

13. Verfahren nach Anspruch 8, wobei die Zusammensetzung trisiloxantensidfrei ist.

14. Verfahren zur Verringerung des Schaums einer agrarchemischen Zusammensetzung, bei dem man eine agrarchemische Zusammensetzung, die einen oder mehrere agrarchemische(n) Wirkstoff(e) und optional einen oder mehrere sonstige(n) agrarchemisch annehmbare(n) Bestandteil(e) enthält, mit einem oder mehreren alkylendiolmodifizierten Polysiloxan(en) der Formel (I): 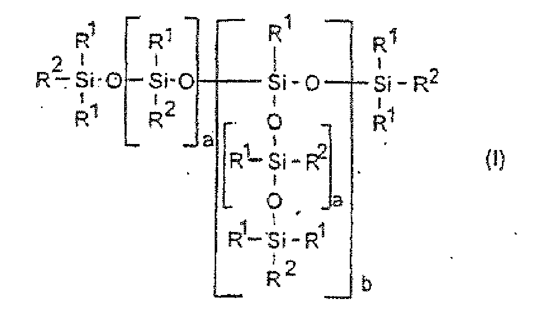 in der
R¹ Alkylreste mit 1 bis 4 Kohlenstoffatomen oder Arylreste, in denen mindestens 80% der R¹-Reste Methylreste bedeuten, bedeuten
R² in dem Molekül gleich oder verschieden sind und die folgenden Definitionen aufweisen können:
A) 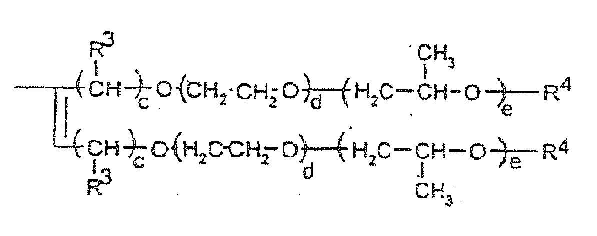 worin
R³ einen Wasserstoffrest oder einen geradkettigen oder verzweigten C₁-C₂₀- Alkylrest bedeutet,
R⁴ einen Wasserstoffrest, Alkylrest oder Carboxylrest bedeutet,
c eine Zahl von 1 bis 20 bedeutet,
d eine Zahl von 0 bis 50 bedeutet,
e eine Zahl von 0 bis 50 bedeutet,
oder
B) dem R¹-Rest entsprechen, mit der Maßgabe, dass in dem durchschnittlichen Molekül mindestens ein R²-Rest der Definition (A) entspricht,
a eine Zahl aus der Gruppe der Bereiche 1 bis 200, 1 bis 50 und 2 bis 20 bedeutet; und
b eine Zahl aus der Gruppe bestehend aus 0 bis 10, eine Zahl <5 und 0 bedeutet;
versetzt.

15. Verfahren nach Anspruch 14, wobei es sich bei dem Wirkstoff um einen Pflanzennährstoff oder ein Pestizid aus der Gruppe Akarizide (AC), Algizide (AL), Attractants (AT), Repellents (RE), Bakterizide (BA), Fungizide (FU), Herbizide (HB), Insektizide (IN), Molluskizide (MO), Nematizide (NE), Rodentizide (RO), Sterilantien (ST), Virozide (VI), Pflanzenwachstumsregulatoren (PG) und Mischungen davon handelt.

16. Verfahren nach Anspruch 15, wobei es sich bei dem Herbizid um einen Sulfonylharnstoff, um Glyphosate oder um ein Salz davon handelt.

17. Verfahren nach Anspruch 14, wobei die alkylendiolmodifizierten Polysiloxane der Formel (I) die Formel R¹₃Si-O-[SiR¹₂-O]ₘ-[SiR¹R²-O]ₙ-SiR¹₃ aufweisen,
in der R¹ Methyl bedeutet, R² der Definition A) entspricht, R³ und R⁴ Wasserstoff bedeuten, c 1 bedeutet, d 1 bis 5 bedeutet, e 0-2 bedeutet, m 2-8 bedeutet und n 1-3 bedeutet.

18. Verfahren nach Anspruch 14, wobei der/die optionale(n) eine oder mehreren agrarchemisch annehmbare(n) Bestandteil(e) aus der Gruppe anionische Tenside, nichtionische Tenside, kationische Tenside, amphotere Tenside, Haftmittel, Träger, Antischaummittel und Lösungsmittel stammt.

19. Verfahren zum Dispergieren von Feststoffen in einer agrarchemischen Zusammensetzung, bei dem man eine agrarchemische Zusammensetzung, die einen oder mehrere agrarchemische(n) Wirkstoff(e) und optional einen oder mehrere sonstige(n) agrarchemisch annehmbare(n) Bestandteil(e) enthält, mit einem oder mehreren alkylendiolmodifizierten Polysiloxan(en) der Formel (I): 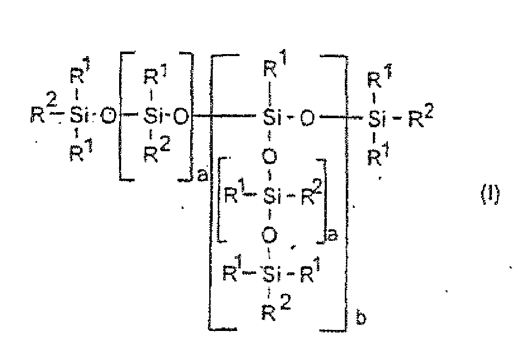 in der
R¹ Alkylreste mit 1 bis 4 Kohlenstoffatomen oder Arylreste, in denen mindestens 80% der R¹-Reste Methylreste bedeuten, bedeuten
R² in dem Molekül gleich oder verschieden sind und die folgenden Definitionen aufweisen können:
a) 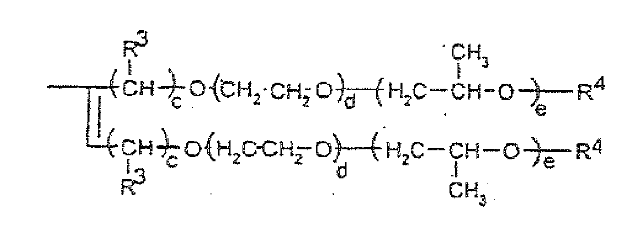 worin
R³ einen Wasserstoffrest oder einen geradkettigen oder verzweigten C₁-C₂₀- Alkylrest bedeutet,
R⁴ einen Wasserstoffrest, Alkylrest oder Carboxylrest bedeutet,
c eine Zahl von 1 bis 20 bedeutet,
d eine Zahl von 0 bis 50 bedeutet,
e eine Zahl von 0 bis 50 bedeutet,
oder
b) dem R¹-Rest entsprechen, mit der Maßgabe, dass in dem durchschnittlichen Molekül mindestens ein R²-Rest der Definition (a) entspricht,
a eine Zahl aus der Gruppe der Bereiche 1 bis 200, 1 bis 50 und 2 bis 20 bedeutet; und
b eine Zahl aus der Gruppe bestehend aus 0 bis 10, eine Zahl <5 und 0 bedeutet;
versetzt.

20. Verfahren nach Anspruch 19, wobei es sich bei dem festen Wirkstoff um einen Pflanzennährstoff oder ein Pestizid aus der Gruppe Akarizide (AC), Algizide (AL), Attractants (AT), Repellents (RE), Bakterizide (BA), Fungizide (FU), Herbizide (HB), Insektizide (IN), Molluskizide (MO), Nematizide (NE), Rodentizide (RO), Sterilantien (ST), Virozide (VI), Pflanzenwachstumsregulatoren (PG) und Mischungen davon handelt.

## Revendications

1. Composition agrochimique comprenant un ou plusieurs principes actifs agrochimiques et un ou plusieurs polysiloxanes modifiés alkylènediol de formule (I) : 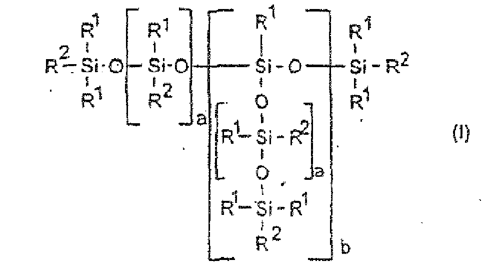 où
R¹ représentent des radicaux alkyle comportant entre 1 et 4 atomes de carbone ou des radicaux aryle, au moins 80 % des radicaux R¹ représentant des radicaux méthyle,
R² sont identiques ou différents dans la molécule et peuvent avoir les définitions suivantes :
A) 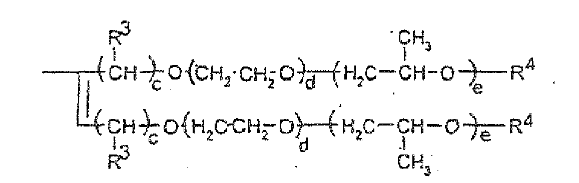
où
R³ représente un atome d'hydrogène ou un radical alkyle linéaire ou ramifié en C₁-C₂₀,
R⁴ représente un atome d'hydrogène ou un radical alkyle ou carboxyle,
c représente un nombre compris entre 1 et 20,
d représente un nombre compris entre 0 et 50,
e représente un nombre compris entre 0 et 50 ;
ou
B) correspondent au radical R¹,
à la condition que dans la molécule moyenne, au moins un radical R² réponde à la définition (A),
a représente un nombre choisi dans le groupe d'intervalles constitué par 1 à 200, 1 à 50 et 2 à 20 ; et
b représente un nombre choisi dans le groupe constitué par 0 à 10, un nombre < 5 et 0 ; et éventuellement un ou plusieurs autres composants de qualité agrochimique.

2. Composition conforme à la revendication 1, où le principe actif est un nutriment végétal ou un pesticide choisi dans le groupe constitué par les suivants : acaricides (AC), algicides (AL), attracteurs (AT), répulsifs (RE), bactéricides (BA), fongicides (FU), herbicides (HB), insecticides (IN), molluscicides (MO), nématicides (NE), rodenticides (RO), stérilisants (ST), virucides (VI), régulateurs de croissance végétale (PG) et leurs mélanges.

3. Composition conforme à la revendication 2, où l'herbicide est une sulfonylurée, un glyphosate ou l'un de leurs sels.

4. Composition conforme à la revendication 1, où les polysiloxanes modifiés alkylènediol de formule (I) répondent à la formule R¹₃Si-O-[SiR¹₂-O]ₘ-[SiR¹R²-O]ₙ-SiR¹₃,
où R¹ représente un groupement méthyle, R² répond à la définition A), R³ et R⁴ représentent des atomes d'hydrogène, c est égal à 1, d est compris entre 1 et 5, e est compris entre 0 et 2, m représente 2-8 et n représente 1-3.

5. Composition conforme à la revendication 1, où le ou les composants optionnels de qualité agrochimique sont choisis dans le groupe constitué par les tensioactifs anioniques, les tensioactifs non ioniques, les tensioactifs cationiques, les tensioactifs amphotères, les agents adhésifs, les vecteurs, les agents antimousse, les solvants et leurs mélanges.

6. Composition conforme à la revendication 5, où le tensioactif est choisi dans le groupe constitué par les suivants : alkoxylates d'alcool et leurs dérivés, alkoxylates d'alkylaryle et leurs dérivés, amides alkoxylés, acides gras alkoxylés, huiles et esters gras alkoxylés, esters de glycérol, esters de glycérol alkoxylés, esters de phosphate, mono- et di-glycérides, copolymères de polyoxyalkylène, tensioactifs de type trisiloxane, tensioactifs de type siloxane, esters de sorbitane, esters de sorbitane éthoxylés, esters de colophane de polyoxyalkylène, amides de polyhydroxyacides gras, alcanolamides, amides gras de sucres et de glucosides d'alkyle, glucosides d'alkyle, polyglucosides d'alkyle, esters de sucrose, amines grasses, amines quaternaires di-grasses, amines quaternaires tri-grasses, amines quaternaires de type imidazolinium, amines alkoxylées, tensioactifs de type ammonium quaternaire, tensioactifs de type ammonium quaternaire alkoxylé et leurs dérivés, imidazolines alkoxylées et leurs dérivés, amines quaternaires propoxylées, sulfates et sulfonates d'alkyle et d'aryle, sulfates de polyoxyalkylène alkyléther, sulfates de polyoxyalkylène alkylaryléther, sulfonates d'oléfine, alkylphosphates, alkylphosphates de polyoxyalkylène, acides gras et leurs sels, glycinates d'alkyle, esters méthyliques sulfonés, acides gras sulfonés, sulfosuccinates et leurs dérivés, glutamates d'acyle, sarcosinates d'acyle, sulfoacétates d'alkyle, carboxylates d'alkyléther, tensioactifs fluorés anioniques, sulfates d'étheramides, taurures d'acides gras N-méthylés, bétaïnes, alkylbétaïnes, alkylamidoalkylbétaïnes, sulfobétaïnes, sultaïnes, hydroxysultaïnes, alkyliminoacétates, iminodialcanoates, aminoalcanoates, propionates d'alkylammonium, alkyliminoacétates, iminodialcanoates, amine oxydes, et leurs combinaisons.

7. Composition conforme à la revendication 1, où la composition ne contient aucun tensioactif de type trisiloxane.

8. Méthode d'amplification de l'efficacité d'une composition agrochimique, ladite méthode comprenant l'ajout d'un ou de plusieurs polysiloxanes modifiés alkylènediol de formule (I) : 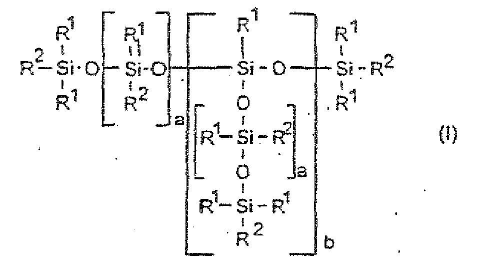 où
R¹ représentent des radicaux alkyle comportant entre 1 et 4 atomes de carbone ou des radicaux aryle, au moins 80 % des radicaux R¹ représentant des radicaux méthyle,
R² sont identiques ou différents dans la molécule et peuvent avoir les définitions suivantes :
A) 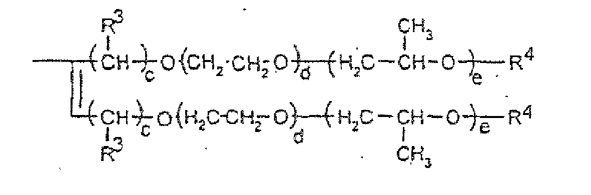
où
R³ représente un atome d'hydrogène ou un radical alkyle linéaire ou ramifié en C₁-C₂₀,
R⁴ représente un atome d'hydrogène ou un radical alkyle ou carboxyle,
c représente un nombre compris entre 1 et 20,
d représente un nombre compris entre 0 et 50,
e représente un nombre compris entre 0 et 50
ou
B) correspondent au radical R¹,
à la condition que dans la molécule moyenne, au moins un radical R² réponde à la définition (A),
a représente un nombre choisi dans le groupe d'intervalles constitué par 1 à 200, 1 à 50 et 2 à 20 ; et
b représente un nombre choisi dans le groupe constitué par 0 à 10, un nombre < 5 et 0 ; et
à une composition agrochimique comprenant un ou plusieurs principes actifs agrochimiques et éventuellement un ou plusieurs autres composants de qualité agrochimique.

9. Méthode conforme à la revendication 8, où le principe actif est un pesticide choisi dans le groupe constitué par les suivants : acaricides (AC), algicides (AL), attracteurs (AT), répulsifs (RE), bactéricides (BA), fongicides (FU), herbicides (HB), insecticides (IN), molluscicides (MO), nématicides (NE), rodenticides (RO), stérilisants (ST), virucides (VI), régulateurs de croissance végétale (PG) et leurs mélanges, ou est un nutriment végétal.

10. Méthode conforme à la revendication 9, où l'herbicide est une sulfonylurée, un glyphosate ou l'un de leurs sels.

11. Méthode conforme à la revendication 8, où les polysiloxanes modifiés alkylènediol de formule (I) répondent à la formule R¹₃Si-O-[SiR¹₂-O]ₘ-[SiR¹R²-O]ₙ-SiR¹₃,
où R¹ représente un groupement méthyle, R² répond à la définition A), R³ et R⁴ représentent des atomes d'hydrogène, c est égal à 1, d est compris entre 1 et 5, e est compris entre 0 et 2, m représente 2-8 et n représente 1-3.

12. Méthode conforme à la revendication 8, où le ou les composants optionnels de qualité agrochimique sont choisis dans le groupe constitué par les tensioactifs anioniques, les tensioactifs non ioniques, les tensioactifs cationiques, les tensioactifs amphotères, les agents adhésifs, les vecteurs, les agents antimousse et les solvants.

13. Méthode conforme à la revendication 8, où la composition ne contient aucun tensioactif de type trisiloxane.

14. Méthode de réduction de mousse d'une composition agrochimique, ladite méthode comprenant l'ajout d'un ou de plusieurs polysiloxanes modifiés alkylènediol de formule (I) : 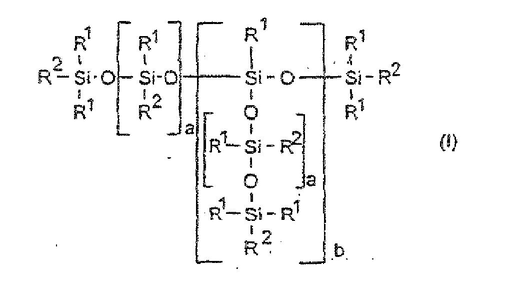 où
R¹ représentent des radicaux alkyle comportant entre 1 et 4 atomes de carbone ou des radicaux aryle, au moins 80 % des radicaux R¹ représentant des radicaux méthyle,
R² sont identiques ou différents dans la molécule et peuvent avoir les définitions suivantes :
A) 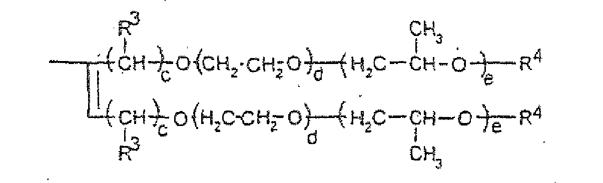 où
R³ représente un atome d'hydrogène ou un radical alkyle linéaire ou ramifié en C₁-C₂₀,
R⁴ représente un atome d'hydrogène ou un radical alkyle ou carboxyle,
c représente un nombre compris entre 1 et 20,
d représente un nombre compris entre 0 et 50,
e représente un nombre compris entre 0 et 50 ;
ou
B) correspondent au radical R¹,
à la condition que dans la molécule moyenne, au moins un radical R² réponde à la définition (A),
a représente un nombre choisi dans le groupe d'intervalles constitué par 1 à 200, 1 à 50 et 2 à 20 ; et
b représente un nombre choisi dans le groupe constitué par 0 à 10, un nombre < 5 et 0 ; et
à une composition agrochimique comprenant un ou plusieurs principes actifs agrochimiques et éventuellement un ou plusieurs autres composants de qualité agrochimique.

15. Méthode conforme à la revendication 14, où le principe actif est un nutriment végétal ou un pesticide choisi dans le groupe constitué par les suivants : acaricides (AC), algicides (AL), attracteurs (AT), répulsifs (RE), bactéricides (BA), fongicides (FU), herbicides (HB), insecticides (IN), molluscicides (MO), nématicides (NE), rodenticides (RO), stérilisants (ST), virucides (VI), régulateurs de croissance végétale (PG) et leurs mélanges.

16. Méthode conforme à la revendication 15, où l'herbicide est une sulfonylurée, un glyphosate ou l'un de leurs sels.

17. Méthode conforme à la revendication 14, où les polysiloxanes modifiés alkylènediol de formule (I) répondent à la formule R¹₃Si-O-[SiR¹₂-O]ₘ-[SiR¹R²-O]ₙ-SiR¹₃,
où R¹ représente un groupement méthyle, R² répond à la définition A), R³ et R⁴ représentent des atomes d'hydrogène, c est égal à 1, d est compris entre 1 et 5, e est compris entre 0 et 2, m représente 2-8 et n représente 1-3.

18. Méthode conforme à la revendication 14, où le ou les composants optionnels de qualité agrochimique sont choisis dans le groupe constitué par les tensioactifs anioniques, les tensioactifs non ioniques, les tensioactifs cationiques, les tensioactifs amphotères, les agents adhésifs, les vecteurs, les agents antimousse et les solvants.

19. Méthode de dispersion de solides dans une composition agrochimique, ladite méthode comprenant l'ajout d'un ou de plusieurs polysiloxanes modifiés alkylènediol de formule (I) : 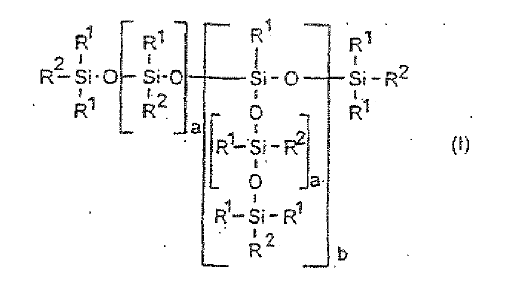 où
R¹ représentent des radicaux alkyle comportant entre 1 et 4 atomes de carbone ou des radicaux aryle, au moins 80 % des radicaux R¹ représentant des radicaux méthyle,
R² sont identiques ou différents dans la molécule et peuvent avoir les définitions suivantes :
a) 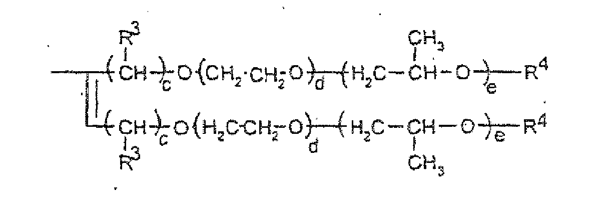 où
R³ représente un atome d'hydrogène ou un radical alkyle linéaire ou ramifié en C₁-C₂₀,
R⁴ représente un atome d'hydrogène ou un radical alkyle ou carboxyle,
c représente un nombre compris entre 1 et 20,
d représente un nombre compris entre 0 et 50,
e représente un nombre compris entre 0 et 50 ;
ou
b) correspondent au radical R¹,
à la condition que dans la molécule moyenne, au moins un radical R² réponde à la définition (a),
a représente un nombre choisi dans le groupe d'intervalles constitué par 1 à 200, 1 à 50 et 2 à 20 ; et
b représente un nombre choisi dans le groupe constitué par 0 à 10, un nombre < 5 et 0 ; et
à une composition agrochimique comprenant un ou plusieurs principes actifs agrochimiques solides et éventuellement un ou plusieurs autres composants de qualité agrochimique.

20. Méthode conforme à la revendication 19, où le principe actif solide est un nutriment végétal ou un pesticide choisi dans le groupe constitué par les suivants : acaricides (AC), algicides (AL), attracteurs (AT), répulsifs (RE), bactéricides (BA), fongicides (FU), herbicides (HB), insecticides (IN), molluscicides (MO), nématicides (NE), rodenticides (RO), stérilisants (ST), virucides (VI), régulateurs de croissance végétale (PG) et leurs mélanges.
